(19) Europäisches Patentamt
European Patent Office
Office européen des brevets

(11) **EP 3 027 962 B1**

(12) **FASCICULE DE BREVET EUROPEEN**

(45) Date de publication et mention de la délivrance du brevet:
**26.09.2018 Bulletin 2018/39**

(51) Int Cl.:
*F21V 5/04* $^{(2006.01)}$ *G02B 6/42* $^{(2006.01)}$
*G02B 19/00* $^{(2006.01)}$

(21) Numéro de dépôt: **14750593.7**

(22) Date de dépôt: **29.07.2014**

(86) Numéro de dépôt international:
**PCT/FR2014/051959**

(87) Numéro de publication internationale:
**WO 2015/015110 (05.02.2015 Gazette 2015/05)**

(54) **SYSTEME OPTOMECANIQUE D'INJECTION DE LUMIERE, COUPLEUR OPTIQUE DUDIT SYSTEME, DISPOSITIF ECLAIRANT AVEC LEDIT SYSTEME**

OPTOMECHANISCHES SYSTEM ZUM EINKOPPELN VON LICHT, OPTISCHER KOPPLER DIESES SYSTEMS UND BELEUCHTUNGSVORRICHTUNG MIT DIESEM SYSTEM

OPTOMECHANICAL SYSTEM FOR INJECTING LIGHT, OPTICAL COUPLER OF SAID SYSTEM, ILLUMINATING DEVICE WITH SAID SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.07.2013 FR 1357461**

(43) Date de publication de la demande:
**08.06.2016 Bulletin 2016/23**

(73) Titulaires:
• **Saint-Gobain Adfors**
  **73000 Chambéry (FR)**
• **Saint-Gobain Placo**
  **92150 Suresnes (FR)**

(72) Inventeurs:
• **GUISET, Pierrick**
  **F-91300 Massy (FR)**
• **SARRANT-FORESTI, Maud**
  **F-75010 Paris (FR)**
• **BROCHIER, Cédric**
  **F-69007 Lyon (FR)**
• **CHEVALIER, Delphine**
  **F-26000 Valence (FR)**

(74) Mandataire: **Saint-Gobain Recherche Département Propriété Industrielle 39 Quai Lucien Lefranc 93300 Aubervilliers (FR)**

(56) Documents cités:
**FR-A1- 2 936 592**

**EP 3 027 962 B1**

**Description**

La présente invention concerne un système optomécanique d'injection de lumière, pour milieu optique (guide ou extracteur), le coupleur optique de ce système, ainsi qu'un dispositif éclairant avec ledit système.

Elle concerne plus particulièrement un système optomécanique d'injection de lumière pour milieu optique mince et dont le collecteur optique est formé d'un faisceau de fibres optiques formant une nappe d'injection de lumière mince notamment pour un milieu extracteur de lumière mince qui est un tissu lumineux comportant des fibres optiques.

La technologie de tissu lumineux par exemple décrite dans les brevets FR2859737 FR2936592 permet de réaliser des surfaces éclairantes grâce au tissage de fibres optiques organiques avec des fibres textiles.

La demande de brevet WO2007/003857A qui concerne le domaine des panneaux d'affichage (publicitaire) par rétro-éclairage au moyen d'une nappe de fibres optiques aptes à émettre latéralement la lumière détaille un système optomécanique d'injection de lumière.

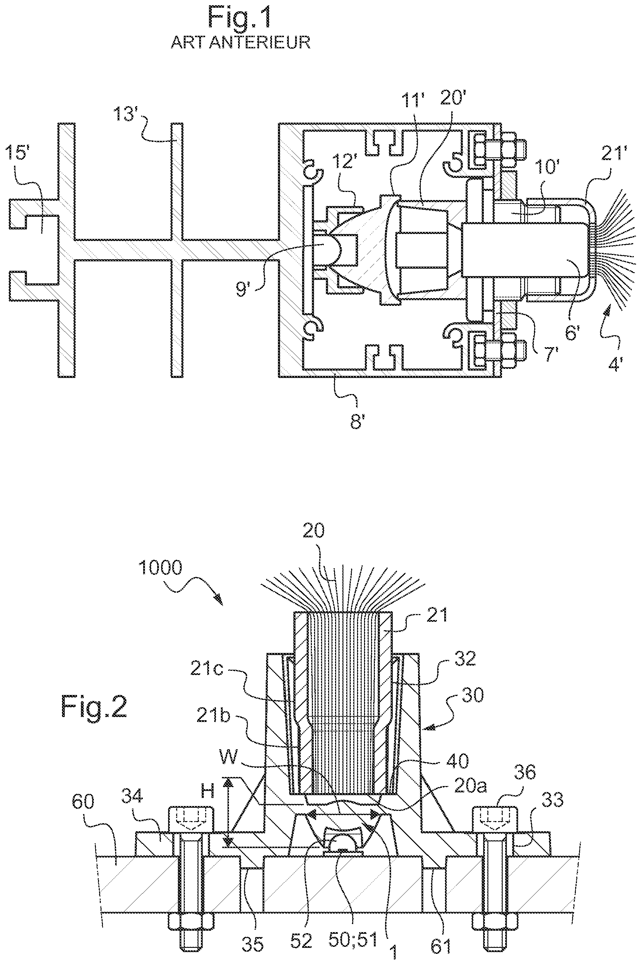

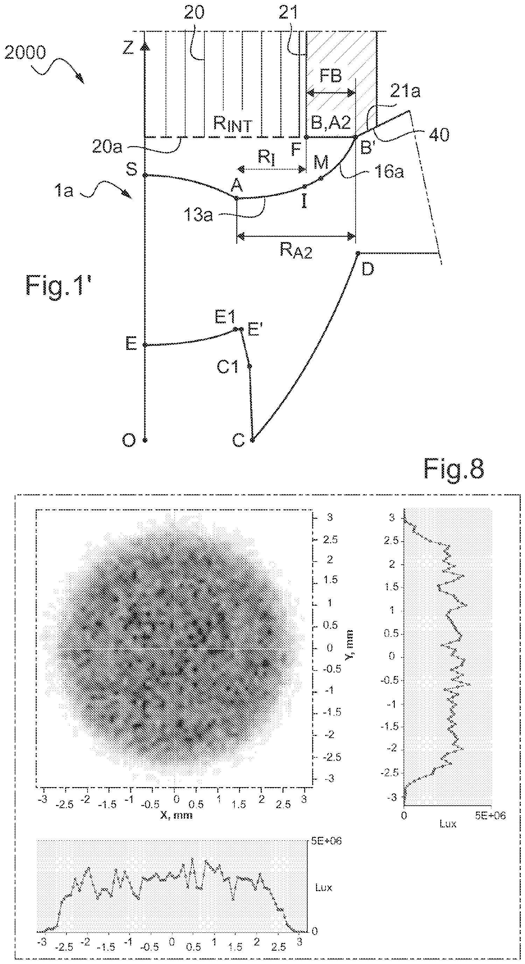

Tel que représenté à la figure 1, le panneau de communication peut présenter un très faible encombrement en épaisseur. La face avant de ce panneau de communication comporte donc un support de message publicitaire rétro-éclairé par une source lumineuse. Cette source lumineuse présente une nappe de fibres optiques disposée en regard de la face arrière du support.

Tel que représenté à la figure 2, les extrémités de chacune des fibres optiques sont rassemblées au niveau d'une bague de regroupement apte à maintenir dans une position déterminée chacune des fibres par rapport aux autres. Les différentes bagues de regroupement sont positionnées à l'intérieur d'un logement ménagé dans un rail. Ce rail permet à la fois de positionner les bagues de regroupement en regard d'une source lumineuse ponctuelle et à la fois, de tendre la nappe. Les sources ponctuelles sont agencées sur un support mécanique.

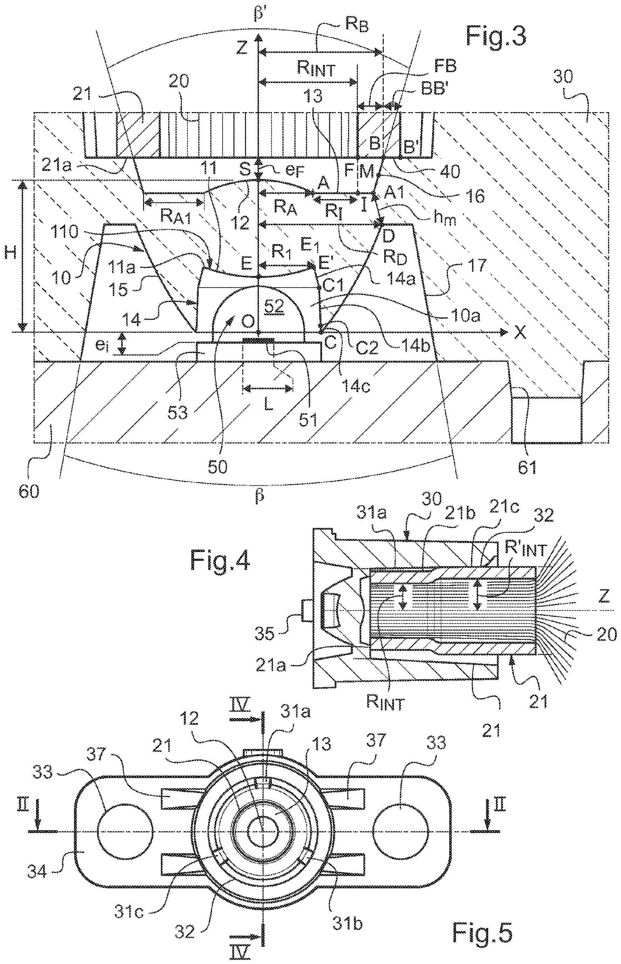

Tel que représenté à la figure 3 reproduite sensiblement dans la présente demande et renommée figure 1, un système optique 11' concentre le faisceau lumineux émis par la source ponctuelle 9', uniquement en direction de la bague de regroupement 6'. Un tel système optique 11' présente un support de centrage 12' pour permettre la mise en place automatique du système optique sur l'axe optique de la source ponctuelle 9'. Par ailleurs, un organe d'alignement 20' permet de positionner la bague de regroupement 6' sur l'axe optique de la source 9'. En effet, l'organe d'alignement 20' coopère avec un logement 10' rapporté sur le rail 7' permettant de positionner la bague de regroupement 6' en regard de la source 9'. Un écrou 21' permet alors d'immobiliser la bague de regroupement 6' par rapport au rail 7'.

Or il s'avère que l'uniformité spatiale de la luminance, qui devient un paramètre important des surfaces lumineuses, n'est pas satisfaisante.

Ainsi la solution décrite ne convient pas pour une application d'éclairage en particulier fonctionnel qui nécessite à la fois efficacité et uniformité.

Le système d'injection décrit reste également assez encombrant et complexe de design et de fabrication.

L'objet de l'invention est donc de proposer un système d'injection de lumière pour milieu optique mince permettant simultanément de maximiser l'efficacité énergétique (lm/W), donc le flux lumineux qui est incident sur le collecteur optique (faisceau de fibres optiques dans une bague de regroupement de préférence) et compris dans l'ouverture numérique de celui-ci, tout en optimisant les propriétés d'uniformité spatiale en injection, système devant rester compatible avec les exigences industrielles (tolérances de fabrication, coût et simplicité), robuste (les contraintes mécaniques impactant les performances optiques), et le plus compact possible (qui réduira aussi l'encombrement final du dispositif éclairant).

Naturellement, l'injection efficace de la lumière au niveau du collecteur, puis de la nappe d'injection, et l'uniformité d'injection au niveau du collecteur, puis de la nappe d'injection, sont deux conditions nécessaires pour in fine obtenir les performances souhaitées pour le dispositif éclairant mince :

- performances optiques: efficacité lumineuse notamment supérieure à 40lm/W pour tendre vers un éclairage relativement économe en énergie en comparaison des sources lumineuses actuellement disponibles sur le marché ; pour cela, on cherchera de préférence à la fois une efficacité d'injection supérieure à 40%, une source lumineuse ponctuelle avec une efficacité lumineuse supérieure à 130lm/W et une efficacité d'extraction de la lumière supérieure à 80% ;
- qualité de l'éclairage: uniformité spatiale de la luminance de la surface lumineuse.

A cet effet, l'invention a pour premier objet un système optomécanique d'injection de lumière, notamment pour milieu optique mince (inférieur à 2cm et mieux subcentimétrique), le système comportant :

- un coupleur optique (apte à former un collimateur et un concentrateur de lumière) qui comporte (mieux est constitué de) un corps (transparent), d'axe (central) Oz, de préférence à symétrie de révolution, O étant le centre de l'entrée du coupleur optique, comprenant (mieux est constitué de) d'un seul tenant :

2

- une lentille, d'axe (central) coïncidant avec l'axe Oz, de largeur maximale W de préférence subcentimétrique, même de préférence millimétrique, lentille comportant (mieux étant constituée de):

  - une face d'entrée convexe (donc courbe, bombée vers l'entrée du coupleur), de cote radiale $R_1$ notamment inférieure à 5mm, et de préférence supérieure à 1,0mm, face d'entrée de préférence à symétrie de révolution, notamment définie aussi par une cote centrale, sur l'axe Oz, dite $h_e$;
  - une face de sortie centrale convexe (donc courbe, bombée vers la sortie du coupleur), définie par une cote centrale, sur l'axe Oz, dite H de préférence inférieure à W, notamment subcentimétrique, même de préférence millimétrique, encore plus préférentiellement inférieure à 5mm, et de cote radiale $R_A$ (notamment inférieure à 2,5mm, et de préférence supérieure à 0,5mm, face de sortie centrale de préférence à symétrie de révolution (dôme,...) ;

  - une face de sortie périphérique, notamment (et de préférence) à symétrie de révolution, qui comprend (ou est constituée de) une partie jointe à la face de sortie centrale, notamment de dimension latérale représentative $R_I$, partie plane (de préférence annulaire) ou qui est concave (bombée vers l'entrée du coupleur) ou qui est tronconique et alors évasée en direction de la sortie du système ;

- une cavité, d'axe (central) coïncidant avec l'axe Oz, de hauteur centrale égale à $h_i$, comportant un fond incluant la face d'entrée et une surface latérale dite d'entrée, cavité (de profondeur $h'_E$ à la jointure avec la surface latérale d'entrée), cavité de préférence à symétrie de révolution notamment tronconique ;
- une surface réflectrice périphérique entourant la lentille et la cavité, d'axe (central) coïncidant avec l'axe Oz, apte à une réflexion totale interne des rayons lumineux réfractés par la surface latérale d'entrée, surface réflectrice périphérique s'étendant au-delà de la face d'entrée (donc du fond de la cavité) en direction de la sortie du coupleur optique, surface réflectrice périphérique de préférence à symétrie de révolution ;

un collecteur optique, d'axe (central) coïncidant avec l'axe Oz, avec en entrée une surface dite collectrice (des rayons lumineux) en regard de la face de sortie centrale (et d'au moins de la partie de la face de sortie périphérique jointe à la face de sortie centrale) de cote radiale $R_{INT}$ millimétrique et mieux inférieure à 6mm et même inférieure à 5mm, et par une ouverture numérique ON inférieure à 1 (mieux inférieure ou égal à 0,6) et comportant une enveloppe ayant (en entrée) une surface (dite) d'extrémité (ou dite libre) donnée, collecteur de préférence à symétrie de révolution, le collecteur optique comportant un toron (circulaire, hexagonal, ..) de fibres optiques, fibres optiques de diamètre inférieur à 1,5mm, la face de sortie centrale et la face de sortie périphérique (à fonctionnalité optique) étant espacées de la surface collectrice ;

- un organe d'alignement du collecteur optique au coupleur optique, notamment d'axe (central) coïncidant avec l'axe Oz, donc coaxial au coupleur optique, le coupleur optique et l'organe d'alignement étant d'un seul tenant ou fixés entre eux directement ou indirectement (par un système de fixation de préférence lié ou sur un support de la source lumineuse du système d'injection),

la distance centrale $e_f$ sur l'axe Oz entre la surface collectrice et la face de sortie centrale étant non nulle et inférieure à 5mm, de préférence inférieure ou égale à 2mm, encore plus préférentiellement inférieure ou égale à 0,6mm, et de préférence supérieure à 0,2mm,
le système optomécanique (le corps du coupleur optique de préférence et/ou l'organe d'alignement éventuellement) comportant une surface de butée de la surface d'extrémité.

Le système optomécanique selon l'invention établit le meilleur compromis entre la quantité et l'uniformité spatiale du flux lumineux injectée dans l'ouverture numérique de la surface collectrice du collecteur optique dans le but d'obtenir le meilleur aspect visuel du dispositif éclairant mince et permet d'adresser des applications haute puissance et, parmi les plus contraignantes, l'éclairage fonctionnel.

Le coupleur optique selon l'invention est d'abord innovant par le choix du design (lentille, cavité, surface réflectrice périphérique) pour un collecteur optique de faible cote radiale (de préférence $R_{INT}$ inférieure à 6mm) et une injection dans un milieu mince (inférieur à 2cm, mieux inférieur à 1cm) et également par son aptitude à fonctionner à proximité de la surface de butée pour parfaire l'alignement optique du collecteur optique placé à très faible distance de la sortie de la lentille.

De manière surprenante, grâce au design selon l'invention, W peut être particulièrement faible sans générer trop de pertes.

Dans l'art antérieur précité, le toron n'est pas au plus proche de la face de sortie, face de sortie qui en outre est de type parabolique et donc dépourvue de face centrale convexe. D'un point de vue mécanique, l'alignement optique est complexe car s'appuie sur le rail périphérique nécessitant un logement, la fixation par vis est latérale à la bague de regroupement et la lentille a besoin d'un support de centrage individuel, et aucune surface de butée n'est prévue.

Selon l'invention, la face d'entrée et la face de sortie centrale sont aptes à orienter ou à maintenir des rayons lumineux (divergents, au sens non précollimatés), centraux, réfractés par la face d'entrée et la face de sortie centrale, dans l'ouverture numérique ON de la surface collectrice du collecteur. La surface réflectrice périphérique et la face de sortie périphérique sont aptes en outre à orienter ou à maintenir des rayons lumineux (divergents, au sens non précollimatés), obliques, réfractés par la surface latérale d'entrée.

La lentille traite les rayons lumineux essentiellement de deux façons différentes :

- les rayons lumineux centraux réfractés dans le fond de la cavité, entièrement ou majoritairement inscrits dans la face de sortie centrale de cote radiale $R_A$,
- les rayons lumineux obliques réfractés dans la surface latérale d'entrée, puis (pour la majorité) réfléchis (par réflexion totale interne) dans la surface latérale périphérique et (pour la majorité) réfractés dans la face de sortie périphérique typiquement annulaire de largeur $R_{A1}$,
- en limitant au maximum la fuite de rayons perdus au-delà de l'extrémité de la face de sortie périphérique aux abords de la surface de butée, par exemple la fuite de rayons perdus car non réfractés par la surface latérale périphérique.

Cette séparation vise en première approche à projeter ces deux populations de rayons centraux et obliques sur deux zones distinctes du collecteur : surface centrale (disque de préférence) de cote radiale $R'_A$ et surface de type annulaire (de préférence) de largeur $R'_{A1}$.

Après mise en butée du collecteur optique, ce dernier est suffisamment proche de la sortie de la lentille sans la toucher pour que l'on satisfasse approximativement $R'_A = R_{A1}$ et $R'_{A1} = R_{A1}$.

La conservation de l'étendue géométrique passe par le bon positionnement de la source lumineuse de type ponctuelle et sa faible distance à la face d'entrée de la lentille et à la surface latérale d'entrée.

On préfère que la source lumineuse soit :

- lambertienne (en champ lointain); telle qu'une diode électroluminescente (LED) possédant, conformément à la source lambertienne nominale, un angle de vue de 60° (angle pour lequel l'intensité lumineuse correspond à la moitié de sa valeur pic),
- avec une optique primaire (dôme de préférence),
- légèrement en retrait de l'entrée du coupleur,
- avec une zone active de largeur L de préférence entre 500$\mu$m et 3mm et même dans une gamme de 1 à 2mm,
- une efficacité lumineuse d'au moins 130lm/W.

Sans optique primaire, la source peut être plus proche de la face d'entrée.

La source lumineuse est choisie de préférence plurichromatique, notamment blanche. La couleur de la lumière émise est de préférence un éclairage entre 2700K et 8000K, de préférence de type « lumière du jour » à 5500K.

La convexité de la face d'entrée de la lentille participe à la compacité de la lentille (faible hauteur H) surtout lorsque le collecteur optique est de très faible rayon $R_{INT}$.

La convexité de la face de sortie centrale permet de redresser les rayons lumineux et de les maintenir dans la région centrale et est choisie en lien avec la forme convexe de la face d'entrée.

Par ailleurs, l'usage de la cavité et de la surface réflectrice périphérique est crucial car une simple lentille biconvexe asphérique induirait d'importantes pertes de flux, en particulier avec une source lambertienne (définie comme telle en champ lointain) telle qu'une LED.

La face d'entrée peut présenter de préférence une surface asphérique. L'équation de la surface de la face d'entrée asphérique s'écrit de préférence :

$$z(r) = \frac{r^2}{R\left(1 + \sqrt{1 - (1+k)\frac{r^2}{R^2}}\right)} + A_4 r^4 + A_6 r^6 + A_8 r^8 + \cdots$$

avec k de préférence égal à zéro.

Les coefficients optimaux sont définis dans le tableau suivant :

| Face d'entrée convexe | | | | | |
|---|---|---|---|---|---|
| Coefficients asphériques | Constante conique (k) | R en mm | $A_4$ | $A_6$ | $A_8$ |
| | 0 | 4,50 | 0,01 | -0,001 | 0 |

La face de sortie centrale peut présenter de préférence une surface asphérique.

L'équation de la surface de la face de sortie centrale asphérique s'écrit de préférence :

$$z(r) = \frac{r^2}{R\left(1 + \sqrt{1 - (1+k)\frac{r^2}{R^2}}\right)} + A_4 r^4 + A_6 r^6 + A_8 r^8 + \cdots$$

avec k de préférence égal à zéro.

Les coefficients optimaux sont définis dans le tableau suivant :

| Face centrale de sortie convexe | | | | | |
|---|---|---|---|---|---|
| Coefficients asphériques | Constante conique (k) | R en mm | $A_4$ | $A_6$ | $A_8$ |
| | 0 | 3,00 | 0 | 0 | 0 |

On préfère que la lentille, la cavité et la surface réflectrice périphérique (et également le collecteur optique, voire l'organe d'alignement) soient à symétrie de révolution.

Pour une uniformité conjuguée à l'efficacité optimale, on peut souhaiter redistribuer une fraction des rayons centraux et obliques, c'est-à-dire envoyer les rayons centraux vers la région périphérique et les rayons périphériques vers la région centrale, quitte à mélanger les rayons centraux et obliques.

De préférence, on utilise la réponse optique dite ponctuelle pour définir le fonctionnement de la lentille aboutissant à ses performances optiques remarquables.

Ainsi, on opère de préférence un certain mélange des deux populations de rayons lumineux obliques et centraux. Plus précisément le coupleur optique peut présenter de préférence l'une au moins des caractéristiques suivantes :

- le fond de la cavité, la face de sortie centrale et la face de sortie périphérique sont tels que, en fonctionnement, des rayons lumineux réfractés par le fond de la cavité notamment issus d'un point sur l'axe Oz (de préférence à la distance $e_i$, notamment légèrement supérieure à $h_e$, inférieure à 0,5mm par exemple 0,2mm) sont réfractés par la face de sortie périphérique, en s'écartant ainsi de l'axe Oz, plutôt que d'être réfractés sur la face de sortie centrale ;
- et de préférence, en fonctionnement, des rayons lumineux notamment issus d'un point sur l'axe Oz (de préférence à la distance $e_i$ notamment légèrement supérieure à $h_e$, inférieure à 0,5mm, par exemple 0,2mm) d'abord réfractés par la surface latérale d'entrée puis sur la surface réflectrice périphérique se retrouvent au niveau de la surface collectrice dans une zone commune à des rayons lumineux notamment issus d'un point sur l'axe Oz (de préférence à la distance $e_i$ notamment légèrement supérieure à $h_e$, inférieure à 0,5mm, par exemple 0,2mm) d'abord réfractés par le fond de la cavité (à proximité d'une distance d sensiblement égale $R_A$ de l'axe Oz par exemple $R_A < d < 1,5R_A$).

Dans ce mode de réalisation préféré, la face de sortie périphérique est apte à réfracter, en orientant ou en maintenant les rayons lumineux réfractés par la zone (la plus) périphérique du fond de la cavité, notamment partie éventuellement plane (annulaire) jointe à la face d'entrée convexe et/ou bordure de la face d'entrée convexe, dans l'ouverture numérique ON de la surface collectrice du collecteur optique.

Le coupleur optique peut présenter de préférence l'une au moins des caractéristiques suivantes :

- si nécessaire des rayons (dits sacrificiels) notamment issus d'un point sur l'axe Oz (de préférence à la distance $e_i$ notamment légèrement supérieure à $h_e$, inférieure à 0,5mm, par exemple 0,2mm) réfractés par la surface latérale d'entrée se propagent dans le corps (transparent) sans rencontrer la surface réflectrice périphérique (qui est plus en deçà) et ne vont pas sur la face de sortie du coupleur ;
- si nécessaire des rayons (dits parasites) notamment issus d'un point sur l'axe Oz (de préférence à la distance $e_i$ notamment légèrement supérieure à $h_e$, inférieure à 0,5mm, par exemple 0,2mm) réfractés par la surface latérale d'entrée vont ensuite sur la face de sortie périphérique et ensuite sur l'enveloppe du collecteur, supprimant ainsi l'accès à la surface collectrice à des rayons source d'hétérogénéités.

On souhaite coupler la source de lumière (de type LED de préférence) dans le collecteur optique avec le maximum d'efficacité et d'uniformité.

Concernant la conservation de l'étendue géométrique si :

- la source est une surface approchée par un disque émissif de diamètre $\phi_s$ (par exemple 1mm pour une source de type LED) émettant de la lumière dans le demi-espace supérieur à des angles $\theta 1$ (par exemple jusqu'à 90° pour une source de type LED) avec n qui est l'indice de réfraction de la lentille primaire (par exemple dôme transparent de la source de type LED) typiquement formé par une résine silicone ou une résine époxy ;
- le collecteur optique est une surface de diamètre $\phi_{int}$ (avec $\phi_{int} = 2R_{INT}$) de cône d'acceptance angulaire dans l'air (n'=1) $\theta'$ égale à 30° (ouverture numérique 0,5).

Les problèmes de concentration de flux lumineux, c'est-à-dire la transformation d'un couple source [ouverture 1, angle 1]; collecteur [ouverture 2, angle 2] sont régies par le théorème de conservation de l'étendue géométrique :

$$\phi_{int}\, n'\, \sin(\theta')= \phi_s\, n\, \sin(\theta 1)$$

On peut estimer alors la surface minimale du collecteur par la formule simplifiée

$$\phi_{int} = 2n\phi_s$$

soit $R_{INT}$ compris entre 0,75mm et 2,8mm pour n compris entre 1,5 et 1,6 et $\phi_s$ compris entre 0,5mm et 1,5mm.

Aussi dans un mode de réalisation préféré, $R_{INT}$, est supérieur ou égal à 1,5mm. De préférence $R_{INT}$ est inférieur à 3,0mm, dans une gamme allant de 2,0mm, mieux de 2,2mm à 2,6mm. Plus la source comme une diode (LED) sera petite, moins l'injection de la lumière émise dans un même collecteur sera critique, notamment vis-à-vis du positionnement de la surface collectrice du collecteur et de la face de sortie du coupleur optique (typiquement ajustement de l'alignement selon Z et de la distance centrale $e_f$). Plus la surface illuminée du collecteur sera petite et plus l'éclairement de la surface du collecteur sera intense. Un collecteur de $R_{INT}$ égal à 2,5mm est donc préféré à un collecteur de $R_{INT}$ égal à 1,5mm.

Pour un collecteur optique de cote radiale $R_{INT}$ donnée, on peut choisir de manière avantageuse un coupleur optique selon l'invention tel que :

- $1,88 R_{INT} < W < 3,1 R_{INT}$,
- $0,4 R_{INT} < R_1 < 0,66 R_{INT}$,
- $0,41 R_{INT} < 0,4 R_A < 0,68 R_{INT}$.

Et même de préférence (dans un premier cas de figure de la face de sortie périphérique), si la partie (notamment sans saut) de la face de sortie périphérique jointe à la face de sortie centrale est plane (notamment annulaire) ou tronconique (et évasée en direction de la sortie du système) alors $0,46 R_{INT} < R_{A1} < 0,76 R_{INT}$, avec $R_{A1}$ qui est la distance radiale entre A et A1, où A est l'extrémité latérale de la face centrale de sortie et A1 l'extrémité latérale de la face de sortie périphérique, notamment en contact et/ou jointe à une rampe (tronconique, annulaire) menant à la surface de butée (au bord interne B).

Dans un mode de réalisation préféré, notamment pour $R_{INT}$ inférieure à 3,0mm et même dans une gamme de 2,2 à 2,6mm, le coupleur optique est défini par les dimensions suivantes :

- W inférieure à 10mm, de préférence inférieure à 7mm,
- H inférieure à W, notamment H inférieure à 4mm, et de préférence supérieure à 3,6mm,
- $R_A$ inférieure à 1,6mm, voire 1,5mm et de préférence supérieure à 1,2mm, $R_1$ est inférieure à 1,6mm, et de préférence supérieure à 1,2mm,
- $h_{E'}$ profondeur maximale du fond de la cavité inférieure à 1,8mm, et de préférence supérieure à 1,4mm

En outre on peut préférer $R_{A1}$ la largeur de la face de sortie périphérique choisie plane (de préférence annulaire) ou tronconique inférieure à 1,7mm, et de préférence supérieure à 1,3mm.

Et le système optique peut être défini de préférence par :

- $e_F$ inférieure à 2mm, encore plus préférentiellement à 1mm, et de préférence supérieure à 0,5mm et/ou
- $e_i$ distance entre O et la source lumineuse sur l'axe Oz inférieure à 0,5mm et de préférence hors de la cavité.

De préférence, la surface d'extrémité de l'enveloppe dépasse du bord interne B de la surface de butée, B étant de cote radiale égale à $R_B$, donc $R_{INT}$ est inférieure à $R_B$

La surface d'extrémité est en regard de la face de sortie périphérique (au-delà de I, en s'éloignant du centre du coupleur).

Et de préférence $0,30R_{INT} < R_I < 0,60R_{INT}$ (et/ou $R_I < R_A$) avec $R_I$ (dimension latérale représentative de la face de sortie périphérique) qui est la distance radiale entre A et I, où I est la projection (selon Oz) sur la face de sortie périphérique du bord interne F de l'enveloppe (bord externe de la surface collectrice autrement dit) et où A est l'extrémité latérale de la face centrale de sortie.

La surface de butée n'est pas un contact ponctuel, linéique (cercle etc) mais implique un appui de l'enveloppe du collecteur sur une certaine largeur, de préférence d'au moins 0,2mm et même d'au moins 0,4mm.

La surface de butée peut être plurielle, discontinue donc multicontacts (avec une pluralité de surfaces d'appui de préférence régulièrement réparties sur 360°) ou de préférence une surface continue de type collerette par exemple. Elle est de préférence à symétrie de révolution.

La surface de butée (continue, voire discontinue) peut comporter des moyens pour la fixation ou l'assemblage de l'organe d'alignement avec le coupleur (lorsqu'il est dissocié du coupleur optique).

La surface de butée peut être plane (et la surface d'extrémité du collecteur est plane de préférence également), notamment annulaire.

La surface de butée peut être à symétrie de révolution et avantageusement tronconique (et évasée en direction de la sortie du système) et la surface d'extrémité est de forme complémentaire à la surface de butée (bord externe en biseau etc) notamment pour être le négatif de la surface de butée tronconique. Ce système permet d'améliorer encore l'alignement optique du collecteur par un centrage radial.

La surface de butée, à proximité de la face de sortie périphérique, ne détériore pas l'uniformité globale souhaitée. De préférence, la surface de butée ne reçoit pas de rayons lumineux (ou en quantité négligeable) du coupleur.

La face de sortie périphérique peut présenter de préférence l'une au moins des caractéristiques suivantes :

- ne présente pas de saut (notamment vertical, suivant Oz) ou marche avec la face de sortie centrale ;
- s'étend plus latéralement que la surface latérale d'entrée,
- est éventuellement une surface sans texturation optique, comme par exemple une lentille de Fresnel, pour une simplicité de conception.

Partie intégrante du corps, la face de sortie périphérique est de préférence moulée (donc a été démoulable). De préférence, elle n'est pas convexe.

Concernant l'étendue de la face de sortie périphérique, on définit deux cas en particulier :

- premier cas (déjà précité) : la partie jointe à la face de sortie centrale forme la face de sortie périphérique, est plane (aux texturations optiques éventuelles près), ou tronconique (évasée en direction de la sortie du système), notamment en retrait de la surface de butée, donc d'extrémité latérale A1, la face de sortie centrale étant de préférence toujours en saillie de cette partie jointe ;
- deuxième cas : la partie jointe à la face de sortie centrale est concave, monte continument (de manière plus ou moins abrupte) jusqu'au bord interne B de la surface de butée.

On préfère que la surface de butée (du corps ou de l'organe d'alignement) soit le plus proche possible de la face de sortie périphérique (de l'extrémité A1 dans le premier cas) par exemple séparée de moins de 1mm de l'extrémité A1.

On préfère une rampe (premier cas) ou une montée continue (deuxième cas, notamment définie à partir de I jusqu'à B) sans rôle optique (ne servant donc pas à réfracter des rayons lumineux même suffisamment collimatés dans le collecteur optique) ou du moins rôle optique négligeable.

La rampe est de préférence tronconique, évasée en direction de la sortie du système, notamment sur une distance la plus courte possible, de préférence inférieure à 1mm.

Naturellement, l'extrémité physique de la face de sortie périphérique A1 correspond de préférence sensiblement à l'extrémité à fonctionnalité optique de la face de sortie périphérique. Ceci va dépendre de la surface latérale d'entrée et de la source, notamment de son extension spatiale, des propriétés angulaires de son rayonnement (en particulier en champ proche), de son positionnement sur l'axe Oz relativement à la cavité.

On préfère que le corps transparent - ou même toute pièce intermédiaire accolée - ne comporte pas de surface adjacente à la face de sortie périphérique, notamment qui serait surélevée, et non apte à former la surface de butée, de par sa forme et/ou sa trop faible hauteur forçant un contact entre la surface collectrice du collecteur et la lentille.

Par simplicité et pour l'alignement optique, on préfère que la surface de butée soit intégrée dans le corps du coupleur optique et même de préférence tronconique.

Dans le deuxième cas la face de sortie périphérique jointe à la face de sortie centrale, est (faiblement) concave, par exemple définie par une équation polynomiale du 4$^{\text{ème}}$ ordre, la face de sortie centrale étant de préférence en saillie de cette partie concave.

La surface réflectrice périphérique s'écarte de la surface latérale d'entrée et de la face d'entrée en direction de la sortie du coupleur et :

- de préférence de cote $z_D$ maximale selon Oz supérieure à H/2 (pour ne pas perdre trop de rayons) et mieux inférieure à la cote minimale de la face de collimation $z_A$ et/ou à la cote minimale de la face de sortie périphérique ;
- et/ou de préférence avec la distance minimale, dite d'entrée matière, entre la surface réflectrice périphérique et la face de sortie périphérique supérieure à 0,8mm (et même si possible la distance minimale entre surface réflectrice périphérique et de la surface de butée si intégrée au coupleur supérieure à 0,8mm), pour faciliter l'injection du plastique chaud (matière préférée de la lentille) le cas échéant ;
- et/ou de préférence de cote radiale $R_D > R_{INT}$ (mieux $R_D > R_{A1}$, même $R_D > R_B$) et $R_D < 1,3R_{INT}$ où D est la limite physique de la surface réflectrice périphérique, de préférence définissant la largeur W (égale à $2R_D$), ou au moins la limite de la surface à fonctionnalité optique de la surface réflectrice périphérique.

La surface réflectrice périphérique peut présenter en outre de préférence l'une au moins des caractéristiques suivantes :

- présenter une surface externe, sans contact optique, ni même mécanique (libre), et/ou sans traitement de surface,
- et/ou, partir de l'extrémité de la surface latérale d'entrée ou être séparé par un aplat (annulaire) de la surface latérale d'entrée,
- et/ou être une surface continue, sans saut ou sans « splines » comme ceux définis par exemple dans la demande WO2009/064275.

La surface réflectrice périphérique peut présenter de préférence une surface asphérique. L'équation de la surface réflectrice périphérique asphérique s'écrit de préférence :

$$z(r) = \frac{r^2}{R\left(1 + \sqrt{1 - (1+k)\frac{r^2}{R^2}}\right)} + A_4 r^4 + A_6 r^6 + A_8 r^8 + \cdots$$

avec k de préférence égal à -1.

Les coefficients optimaux sont définis dans le tableau suivant :

| surface réflectrice périphérique | | | | | |
|---|---|---|---|---|---|
| Coefficients asphériques | Constante conique (k) | R en mm | $A_4$ | $A_6$ | $A_8$ |
| | -1 | 1,25 | -0,00569 | 0,0001373 | 0,00002663 |

La surface latérale d'entrée permet de réfracter les rayons obliques et ainsi de collimater une partie importante de la lumière oblique émise par la source (LED de préférence). Il n'est pas suffisant de l'associer à une lentille centrale de face d'entrée convexe et de face de sortie centrale plane car la répartition de la lumière concentrée sur le collecteur n'est alors pas aussi uniforme sur la surface du collecteur.

La surface latérale d'entrée peut présenter de préférence l'une au moins des caractéristiques suivantes :

- démoulable (surface renfermant au moins un creux à éviter) ;
- préférentiellement tronconique, sur au moins une (première) portion de surface la plus proche du fond de la cavité, évasée en direction de l'entrée du coupleur, première portion de surface prolongée de préférence par une ou plusieurs autres portions tronconiques évasées en direction de l'entrée du coupleur,
- de cote radiale $R_C > R_1$ et de préférence $R_C > R_A$, où C est le point le plus bas de la cavité (de cote en z égale à 0).

On réduit au mieux les pics périphériques sur la carte d'éclairement en inclinant (au moins) cette portion de surface la plus proche du fond de la cavité, dite première portion tronconique. En variante, cette première portion peut être cylindrique.

On peut prévoir :

EP 3 027 962 B1

- une deuxième portion tronconique, de préférence plus haute (suivant z) que la première portion, avec une deuxième inclinaison par rapport à l'axe Oz en s'éloignant de la face d'entrée qui est inférieure à la première inclinaison (pente d'au moins 5 fois, mieux 8 fois plus faible de préférence), évasée en direction de l'entrée du coupleur,
- et éventuellement à des fins de protection mécanique une troisième (plus courte) portion de surface tronconique, évasée en direction de l'entrée du coupleur, avec une troisième inclinaison, de préférence jusqu'à l'extrémité de la surface réflectrice périphérique.

Sur l'ensemble des portions de surface, on préfère que les différences entre chaque pente et la pente de la droite passant par les 2 points extrêmaux de la section longitudinale de la surface latérale d'entrée soit inférieure en valeur absolue à 2°et que l'écart type associé soit inférieur à 10°.

De préférence, si la source lumineuse est munie d'un dôme primaire, ce dernier est majoritairement inséré dans la cavité.

Par exemple, la distance entre la surface du dôme et la surface latérale d'entrée est supérieure à 100$\mu$m et inférieure à 500$\mu$m.

Par exemple, la distance entre la surface du dôme et la face centrale d'entrée est supérieure à 100$\mu$m et inférieure à 300$\mu$m, mieux inférieure ou égale à 200$\mu$m.

De préférence la source lumineuse (quasi ponctuelle), comme une diode, est lambertienne en champ lointain et d'étendue comprise entre 500$\mu$m et 2mm, par exemple 1,5mm.

La face centrale d'entrée forme de préférence au moins 90% du fond et peut être prolongée éventuellement, de préférence sans marche/saut, par une face d'entrée périphérique plane (de préférence annulaire), de largeur R'$_1$ inférieure à 0,5R$_1$ même à 0,1R$_1$. Cet éventuel aplat entre la face d'entrée et la surface latérale d'entrée sert par exemple pour rediriger des rayons lumineux issus d'une source sur l'axe Oz vers la périphérie de la carte d'éclairement.

Le coupleur optique peut être constitué uniquement d'une matière transparente et de préférence de plastique notamment en PMMA (polyméthacrylate de méthyle) et de préférence en PC (polycarbonate) moins cassant. Il peut donc être de préférence moulé, pour une industrialisation simple.

Le moulage par injection, aussi appelé injection plastique, est un procédé de mise en oeuvre de matières thermoformables, notablement les matières thermoplastiques. La plupart des pièces thermoplastiques sont fabriquées avec des presses d'injection plastique : la matière plastique est ramollie puis injectée dans un moule, et ensuite refroidie. Le moulage par injection est une technique de fabrication de pièces en grande ou très grande série. Il concerne avant tout les matières plastiques et les élastomères (caoutchoucs). Contrairement à d'autres procédés où le moule est perdu (moulage en sable, à la cire perdue, ...), on veille à ce que les pièces injectées ne restent pas coincées dans les coquilles et qu'elles puissent au contraire en sortir sans aucune détérioration. C'est pour cela que les surfaces un tant soit peu importantes ne sont pas parallèles à la direction d'extraction, mais en diffèrent d'un petit angle appelé « dépouille ».

Les dimensions du design du coupleur optique (et/ou de l'organe d'alignement) répondent de préférence à des contraintes liées à l'étape d'injection plastique. Elles visent principalement à faciliter l'injection du plastique chaud (d'où h$_m$ > 0,8mm) ainsi que le démoulage (angle d'entrée $\beta$ > 2° et angle de sortie $\beta'$ ≥ 20°). Par ailleurs, reprécisons que les formes d'optique qui seraient creuses ne sont pas réalisables avec la technique de moulage par injection.

Aussi, la dépouille mini doit être de préférence supérieure à 0° mieux d'au moins 1° et même d'au moins 3°.

L'indice de réfraction du coupleur optique est typiquement de 1,5 à 550nm.

Selon l'invention, on entend par millimétrique, une valeur inférieure à 10mm et d'au moins 1mm.

Selon l'invention, on entend par submillimétrique, une valeur inférieure à 1mm.

Selon l'invention, on entend par subcentimétrique, une valeur inférieure à 1cm.

Le collecteur optique et l'organe d'alignement sont solidaires. On préfère éviter l'usage de rails de fixation supplémentaires sous forme d'un cadre périphérique comme dans l'art antérieur encombrant et complexe.

Le collecteur optique est de préférence assemblé directement, de préférence mécaniquement, (emboité) dans l'organe d'alignement qui est à proximité de la face de sortie périphérique et/ou de la surface de butée. Le collecteur optique par son enveloppe est maintenu dans l'organe d'alignement et peut être aisément monté et démonté.

L'organe d'alignement est de préférence assemblé directement sur le coupleur, de préférence mécaniquement, voire fait partie du coupleur (une pièce monolithique), et, enfin le coupleur est rapporté et fixé via un support type PCB (Printed Circuit Board en anglais), porteur de la source de lumière quasi ponctuelle comme une diode (LED).

Par exemple, l'organe d'alignement est solidaire du coupleur optique par des moyens de maintien (mécaniques tels que bride(s), écrou, clipsage, encliquetage, montage en force, voire magnétiques ou de collage), moyens intégrés sur la surface de butée appartenant au coupleur ou moyens intégrés sur une surface du coupleur déportée de la surface de butée éventuellement plus proche de l'entrée du coupleur.

Alternativement, le coupleur optique est de préférence assemblé directement sur l'organe d'alignement (qui intègre la surface de butée), et enfin l'organe d'alignement est rapporté et fixé via un support type PCB (et aligné) porteur la source de lumière quasi ponctuelle comme une diode (LED).

Par exemple, le coupleur intègre des moyens de maintien mécaniques tels qu'encoches, encliquetage, nervures de serrage, moyens pour montage en force, voire magnétiques ou de collage, d'une partie dédiée du coupleur (« oreille », flanc), de préférence au-dessus de la surface latérale périphérique et au deçà de la surface de butée appartenant à l'organe d'alignement (liaison donc plus proche de l'entrée du coupleur) et/ou en deçà de la face de sortie périphérique (ou dans son prolongement latéral).

L'organe d'alignement peut présenter de préférence l'une au moins des caractéristiques suivantes :

- est en plastique (moulé, etc, ...) notamment en polycarbonate (PC), transparent ou opaque, notamment de matière identique ou du moins de même coefficient de dilatation thermique que le coupleur,
- notamment est d'un seul tenant avec le coupleur,

et pour l'assemblage du collecteur optique, il comporte de préférence l'une au moins des caractéristiques suivantes :

- une dimension latérale (diamètre typiquement) variable allant croissant vers les Z (s'éloignant du coupleur) ;
- des nervures de serrage ou des moyens pour un montage en force ou de type baïonnette du collecteur optique ;
- entoure l'enveloppe dans une première région (notamment sertie de l'enveloppe) et l'enserre dans une second région appelée zone de serrage (montage démontable) de longueur suffisante pour assurer le maintien mécanique et l'alignement du collecteur.

Par exemple le collecteur optique est de section circulaire ou hexagonale et l'organe d'alignement est un cylindre. En variante, si le collecteur est carré, alors l'organe d'alignement est un parallélépipède rectangle de section carrée.

La surface collectrice du collecteur est de préférence plane et polie.

Aussi, pour la compacité, la facilité de montage et l'alignement optique, dans un mode de réalisation préféré :

- l'organe d'alignement qui est de préférence à symétrie de révolution et d'axe coïncidant avec l'axe Oz, loge le collecteur optique (enveloppe incluse) lui-même de préférence à symétrie de révolution et de préférence qui est un faisceau de fibres optiques et
- le corps et/ou l'organe d'alignement intègre la surface de butée,
- et de préférence le corps intègre l'organe d'alignement.

Il est préférable d'intégrer le corps (le coupleur optique) au design de l'organe d'alignement si possible, pour plusieurs raisons :

- ces derniers sont de très petite taille (surtout le coupleur), donc il est difficile d'intégrer des pattes de fixation (de clipsage par exemple) dans le système,
- la fixation, par exemple par clipsage, implique la présence de liaisons mécaniques de moindre résistance que dans une approche monolithique, notamment si elle est soumise à des efforts importants, par exemple ceux qui peuvent se produire lors des opérations de montage et démontage,
- il faut développer deux pièces et donc deux moules donnant un prix d'outillage plus important et un délai de mise au point plus long.

Une voie alternative permettant au moins de conserver les performances optiques, même si voie moins préférée, consiste tout de même à utiliser deux pièces indépendantes, le coupleur optique et l'organe d'alignement, de préférence centrées (le long de l'axe Oz) et alignées entre elles par coopération avec le support de source (PCB) au moins du coupleur optique (et de préférence seulement) et immobilisées selon Oz par fixation sur le support de source (PCB).

Le système d'injection peut comprendre une source de lumière (quasi ponctuelle), notamment une diode électroluminescente (LED) :

- de faible épaisseur inférieure à 2mm, boitier et optique primaire éventuelle inclus,
- dont la zone émissive est centrée sur l'axe Oz et placée à une distance $e_i$ sur l'axe Oz inférieure à 0,4mm située sous le centre O de l'entrée du coupleur,
- avec une embase (ou boitier) subcentimétrique même submillimétrique en matière plastique, par exemple en FR-4, ou en céramique - elle-même reposant sur et électriquement connecté à un support de source (de forme générale plane, flexible ou rigide) qui est de préférence une carte à circuit imprimé dite PCB (Printed Circuit Board en anglais) support par exemple en FR-4 ou en métal, type aluminium.

Le coupleur optique intégrant de préférence l'organe d'alignement peut ainsi reposer sur le support PCB (Printed Circuit Board en anglais), via une ou des surfaces d'appui du coupleur, de préférence en saillie par rapport à la cavité,

EP 3 027 962 B1

de préférence surface(s) d'appui espacée(s) de la surface réflectrice périphérique - laissant un espacement entre l'entrée O du coupleur et le support de source (PCB), (et même de la source) -.

Sinon le coupleur optique peut être assemblé dans l'organe d'alignement qui repose sur le support de source (PCB), via une ou des aires d'appui, de préférence en saillie par rapport à la cavité, de préférence aire(s) d'appui espacée(s) de la surface réflectrice périphérique - laissant un espacement entre l'entrée O du coupleur et le support (et la source) -.

Le coupleur optique intégrant de préférence l'organe d'alignement peut être solidaire du support de source (PCB); de préférence le support de source (PCB)et une ou des zones (latérales, notamment à la surface réflectrice périphérique) du coupleur, notamment en saillie par rapport à la cavité, comportent des moyens d'assemblage complémentaires (mâle - femelle, montage en force) formant ainsi un système d'autocentrage (blocage latéral, grossièrement selon Oz) de la source quasi ponctuelle avec le coupleur optique et éventuellement par des moyens de verrouillage additionnels (blocage selon Oz).

Sinon le coupleur optique peut être assemblé (solidaire) dans l'organe d'alignement qui repose sur le support de source (PCB) et est solidaire du support de source (PCB). De préférence, une ou des aires de l'organe d'alignement et le support de source (PCB) comportent des moyens d'assemblage complémentaires (mâle - femelle, avec montage en force) formant ainsi un système d'autocentrage (blocage latéral, grossièrement selon Oz) de la source quasi ponctuelle (diode) au coupleur optique et éventuellement par des moyens de verrouillage additionnels (blocage selon Oz).

Par exemple, les moyens d'assemblage complémentaires comportent au moins deux organes mâle comme des tenons sur deux surfaces d'appui du coupleur ou de l'organe d'alignement portant le coupleur (face arrière de deux ailettes alignées de part et d'autre de la lentille de préférence) montés (coopérant) sur le support de source (PCB) percé à cet effet (au moins trous borgnes ou traversants formant deux organes femelles). Par exemple, plus précisément, au moins deux tenons sur deux surfaces d'appui du coupleur ou de l'organe d'alignement portant le coupleur (face arrière de deux ailettes alignées de part et d'autre de la lentille de préférence) sont montés en force grâce à leur usinage conique sur le support de source (PCB) percé à cet effet (trous borgnes ou traversants). A l'imprécision de fabrication près (par exemple +/- 100$\mu$m), le diamètre du perçage dans le support de source est ajusté de façon à ce qu'il corresponde au diamètre inférieur du tenon. Comme le diamètre supérieur du tenon est légèrement plus grand, il permet bien de monter le coupleur ou l'organe d'alignement en force dans le support de source.

On assure ainsi un auto-centrage fin des trois éléments : la source de lumière telle que la LED, le coupleur optique et le collecteur optique dans l'organe d'alignement. Et au moment du montage, les moyens d'assemblage complémentaires évitent qu'un déplacement latéral de la surface latérale d'entrée ne vienne détériorer la source de lumière (diode).

On préfère une seule injection de plastique pour fabriquer tout le système : coupleur optique - organe d'alignement du collecteur - zones d'appui et/ou de fixation sur le support et/ou de centrage par rapport à la source de lumière.

La connexion/déconnexion entre chaque pièce du système organe d'alignement et collecteur, coupleur et carte (support PCB), est souhaitée aisée.

Le support PCB peut être lui-même sur un dissipateur thermique comme une plaque métallique, notamment en aluminium. Le coupleur optique avec le dissipateur thermique peut être logé dans un boitier, de préférence métallique, avec une ouverture pour faire sortir une partie du collecteur optique (toron).

Le maintien du collecteur dans l'organe d'alignement est souhaité suffisamment ferme pour que celui-ci ne puisse faire l'objet d'une déconnection involontaire, par exemple lors d'une contrainte mécanique appliquée au support de source (PCB). La force de maintien peut être ajustée par le choix de l'épaisseur des rainures et/ou par le choix du diamètre extérieur de l'enveloppe.

Naturellement, l'invention vise également la protection des pièces clés de l'invention intégrables dans le système d'injection précité.

Aussi un objet de l'invention concerne l'ensemble comportant le coupleur optique et l'organe d'alignement du système optomécanique tels que déjà décrits, solidaires ou aptes à être solidaires (avant montage), éventuellement en une pièce, le corps ou l'organe d'alignement intégrant la surface de butée à la mise en appui du collecteur optique précité.

Naturellement, le coupleur optique comme l'organe d'alignement comportent les éléments précités préférés pour le centrage et la fixation sur le support source et pour le montage démontage du collecteur optique dans l'organe d'alignement.

Egalement un objet de l'invention concerne le coupleur optique du système optomécanique tel que déjà décrit, (seul), le corps intégrant, de préférence, la surface de butée apte à la mise en appui du collecteur optique précité.

Bien que moins préféré le coupleur optique pourrait être utilisé dans un système optomécanique d'injection alternatif qui différerait par le fait que la surface d'extrémité n'est pas en butée (mais la surface collectrice reste à $e_F$ donc proche de la face de sortie centrale). donc le système (le coupleur) ne comporte pas de surface de butée.

Naturellement, le coupleur optique peut comporter les éléments précités préférés pour le centrage et la fixation sur le support source.

Le collecteur optique selon l'invention peut présenter de préférence l'une au moins des caractéristiques suivantes :

- comporter le toron (circulaire, hexagonal, ..) de fibres optiques avec des fibres optiques de diamètre, préférentiellement inférieur à 1mm, même inférieur à 750μm,
- avoir une enveloppe qui est une bague métallique sertie (de préférence sur au moins une distance de 4mm et d'au plus 8mm) puis non sertie (de préférence sur au moins une distance de 3mm et d'au plus 6mm) rassemblant et maintenant les extrémités des fibres optiques en toron (de type circulaire, hexagonale), les fibres optiques s'organisant en au moins une nappe d'injection, notamment débouchant ensuite sur un milieu extracteur de lumière de préférence mince.

Le collecteur peut comprendre des fibres optiques (dans l'enveloppe de préférence sertie) qui peuvent, indépendamment ou en totalité, présenter de préférence l'une au moins des caractéristiques suivantes :

- de diamètre submillimétrique notamment 750μm, et mieux inférieur à 750μm, de préférence de 200 à 550μm et même de préférence 500μm environ (typiquement entre 470 et 530μm), ou même 250μm,
- de puissance moyenne par fibre de préférence comprise entre 0,35% et 0,46% du flux émis par la source (LED) pour des fibres de diamètre 500μm environ (typiquement entre 470 et 530μm), ou de puissance moyenne par fibre entre 0,075% et 1,35% du flux émis par la source (LED) de diamètre entre 250μm et 750μm,
- de section circulaire, voire sensiblement circulaire, voire hexagonale, voire partiellement circulaire et partiellement hexagonale notamment au niveau d'une zone de sertissage de l'enveloppe,
- être choisies identiques.

Les fibres optiques peuvent être formées d'un matériau minéral ou organique composant le coeur de la fibre optique. Les matériaux minéraux pour le coeur sont par exemple choisis parmi le groupe comprenant le verre, le quartz, la silice. Les matériaux organiques pour le coeur sont par exemple choisis parmi le groupe comprenant le polyméthacrylate de méthyle (PMMA), le polycarbonate (PC), les cyclo-oléfines (COP) et les polymères fluorés. Les fibres optiques peuvent avoir un coeur (guide de lumière) recouvert d'une gaine d'indice de réfraction inférieur à celui du coeur et qui peut être de différente nature. A titre d'exemple de fibres coeur-gaine convenant tout particulièrement, on peut citer les fibres comprenant un coeur en polyméthacrylate de méthyle (PMMA) et une gaine à base d'un polymère fluoré tel que le polytétrafluoroéthylène (PTFE). Lorsque les fibres utilisées sont des fibres coeur-gaine, l'épaisseur de la gaine peut être comprise entre 2 et 15 μm, de préférence entre 5 et 10 μm.

L'enveloppe peut entourer entièrement (de préférence notamment surface annulaire ou tronconique) voire par morceaux (annulaire ou tronconique pour chaque morceau, etc en arceaux...) la surface collectrice (la partie collectrice) du collecteur.

On préférera une enveloppe métallique (par exemple en aluminium) réunissant les fibres optiques sur une surface (sensiblement) circulaire de $R_{INT}$ autour de 2,5mm et des fibres optiques (synthétiques par exemple) de 500μm de diamètre ayant une ouverture numérique de 0,5 (une acceptance angulaire de 30°). Et de préférence on choisit au moins 70 fibres, voire 75 fibres optiques par collecteur (toron).

Si on baisse le nombre de fibres optiques, on peut abaisser $R_{INT}$ et de préférence ajouter un anneau « sacrificiel » pour garder un sertissage pour une cote radiale autour de 2,5mm.

Le système d'injection selon l'invention peut comprendre un guide optique (mince), de préférence directement en sortie de l'enveloppe et ensuite un dispositif éclairant peut comprendre le système d'injection et un milieu extracteur de lumière (mince). On préfère au moins une nappe d'injection de préférence en fibres optiques (consistant en des fibres optiques notamment), notamment en une ou deux couches et même un milieu extracteur de lumière comportant des fibres optiques extractrices de lumière.

Encore plus préférentiellement la nappe d'injection est en fibres optiques issues du collecteur optique (qui est un toron) et même le milieu extracteur de lumière comporte ces fibres optiques devenues extractrices de lumière.

La nappe d'injection en fibres optiques selon l'invention peut présenter de préférence l'une au moins des caractéristiques suivantes :

- la nappe d'injection comporte une seule couche de fibres optiques, fibres optiquement indépendantes (couplage transverse faible voire nul) ou deux couches par exemple pour émettre du flux par deux faces principales du milieu extracteur,
- la nappe d'injection comporte une épaisseur inférieure à 5mm et mieux inférieure à 1mm, de préférence correspondant au diamètre des fibres optiques.

Les fibres de la nappe d'injection (sur une couche donnée) sont typiquement régulièrement espacées, avec une distance entre elles (centre à centre) de préférence comprise entre 0,3mm et 2mm et une distance de séparation (espace vide entre fibres) de préférence entre 0,15mm et 2,2mm.

Autrement, dans une réalisation préférée, le collecteur optique comporte de préférence un toron de fibres optiques, fibres optiques de diamètre inférieur à 1,5mm, les fibres optiques s'organisant en sortie de l'enveloppe en au moins une nappe d'injection mince, notamment d'épaisseur inférieure à 2mm, débouchant sur un milieu extracteur de lumière mince, d'épaisseur inférieure à 5mm.

Bien sûr, le support source (suffisamment étendu à cet effet, de préférence support PCB de LED) peut porter une pluralité de systèmes d'injection, tel que celui cité précédemment, systèmes côte à côte, de préférence identiques et conduisant à une pluralité de nappes d'injection (de préférence en fibres optiques) côte à côte, (aptes à être) couplées optiquement à une tranche d'un milieu extracteur de lumière. Et même on peut augmenter, doubler le nombre de systèmes d'injection, tel que celui cité précédemment, en en rajoutant sur un bord opposé du milieu extracteur.

Comme milieu extracteur de lumière de préférence mince, on préfère un élément extracteur de lumière de type nappe de fibres optiques rendues extractives (sablage, laser ...), et/ou un film transparent ou semi-transparent extracteur de lumière, notamment diffusant en volume ou en surface.

Un textile tissé est une feuille constituée de fils à base de fibres réparties directionnellement obtenue par tissage ou tricotage. Le tissage est le résultat de l'entrecroisement, dans un même plan, de fils disposés dans le sens de la chaîne (appelés ci-après fils de chaîne) et de fils disposés perpendiculairement aux fils de chaîne, dans le sens de la trame (appelés ci-après fils de trame). Le liage obtenu entre ces fils de chaîne et ces fils de trame est appelé armure. Les fils de liages permettent d'assurer la bonne cohésion de l'ensemble du textile tissé et de conférer en fonction de leur nature, de leur dimension et/ou de leurs propriétés mécaniques, des propriétés particulières au textile.

Or il existe actuellement des tissus lumineux comprenant un textile tissé obtenu par tissage de fils dits de liage et de fibres optiques. Le terme « fil de liage » comprend tous fils ou fibres autres que des fibres optiques, c'est-à-dire tous fils ou fibres ne présentant pas la propriété de pouvoir émettre latéralement de la lumière et donc non directement connectés ou connectables au système d'injection.

Un tissu lumineux et son procédé de tissage sont par exemple décrits dans le document FR 2859737 ou WO2005/026423 et le collage sur un support rigide dans le FR2 907194 ou son agencement sur un support rigide dans le document FR2938628 (tous les exemples) ou l'art antérieur précité WO2007/003857 (figures 1 et 2).

Les tissus lumineux connus comprennent préférentiellement des textiles tissés avec :

- des fils de liages comprenant des fibres synthétiques polymères de nature organique telles que des fibres de polyester ou de polyamide et
- des fibres optiques de nature organique.

Plus largement on peut choisir :

- des fils de liages comprenant les fibres organiques d'origine naturelle, animale ou végétale, telles que la soie, la laine, le coton, le lin, le chanvre,
- des fils de liages comprenant les fibres organiques comprenant des polymères naturels ou synthétiques tels que la cellulose, les polyamides, les polyesters tels que le polyéthylène téréphtalate (PET) et le polybutylenterephthalate (PBT), le polychlorure de vinyle (PVC), les polyoléfines telles que le polypropylène (PP) et le polyéthylène (PE), les polyacryliques tels le polyméthacrylate de méthyle,
- des mélanges de fibres.

Avantageusement, le textile tissé selon l'invention peut comprendre des fils de liages comprenant des fibres minérales, notamment comprend en masse par rapport à la masse du textile tissé au moins 20%, au moins 30%, au moins 40%, au moins 50 %, au moins 60 %, au moins 70 %, au moins 80 %, au moins 90 % de composé de nature minéral.

Les fibres optiques du textile tissé comprennent des altérations invasives, correspondant à des encoches ou des petites fentes, qui permettent l'extraction de la lumière au niveau des fibres car elles modifient l'angle de réflexion des rayons lumineux à l'intérieur de la fibre et la transmission latérale de la lumière à l'extérieur de la fibre. Les fibres optiques permettent donc à la fois de véhiculer la lumière à l'intérieur de leur structure mais également d'émettre latéralement de la lumière. Par conséquent, les fibres optiques permettent de guider de façon répartie la lumière à l'intérieur du tissu lumineux et d'illuminer de manière diffuse les surfaces principales du tissu lumineux.

Les altérations invasives peuvent être obtenues de diverses manières et notamment par des procédés d'abrasion tels que le sablage, l'ablation au moyen d'un rayonnement lumineux de forte intensité tel qu'un laser. Les altérations invasives peuvent être réalisées sur les fibres optiques avant ou après tissage. Les altérations invasives peuvent être réalisées uniquement sur une portion de surface de la fibre ou sur deux fractions de surface opposées de la fibre.

Le textile tissé peu comprendre deux groupes de fibres optiques, celles abrasées sur une fraction de surface orientée vers une première face principale du textile, celles abrasées sur une fraction de surface orientée vers la face principale opposée du textile. Ces groupes peuvent être de préférence dans des régions distinctes, adjacentes ou dans une région commune.

Le milieu extracteur de lumière, notamment mince, du dispositif éclairant selon l'invention peut être donc choisi de préférence parmi au moins l'un des éléments suivants :

- des fibres optiques (de préférence) d'au moins une nappe d'injection en fibres optiques de préférence issues du collecteur, fibres optiques abrasées en surface pour la diffusion de la lumière, fibres éventuellement au moins partiellement dans ou sur une matière (ou matrice) transparente ou semi-transparente (translucide par exemple), notamment verre ou plastique, matière de préférence d'indice de réfraction (à 550nm) qui s'écarte d'au moins 0,05 voire 0,1 de l'indice de réfraction de la gaine de la fibre optique composée d'un coeur entouré d'une gaine,
- un tissu lumineux comportant (mieux constitué d') un textile tissé comprenant des fibres optiques tissées dans un textile, fibres optiques (de préférence) d'au moins une nappe d'injection en fibres optiques de préférence issues du collecteur, fibres optiques abrasées en surface pour la diffusion de la lumière, éventuellement associé à un verre ou plastique ou entre deux verres (de préférence via des intercalaires de feuilletage par exemple en polyvinyl butyral (PVB), en éthylène-vinyl acétate (EVA) ou en polyuréthane, voire via une résine ou tout autre moyen de liaison etc) ou deux plastiques ou encore entre un verre et un plastique,
- au moins une feuille ou un film transparent ou semi-transparent, notamment verre et/ou plastique, couplé (par la tranche) à une nappe d'injection en fibres optiques, issues du collecteur, film, de préférence mince, comportant des moyens de diffusion de la lumière.

On peut bien sur combiner (juxtaposer voire superposer) les éléments extracteurs précités.

Comme milieu extracteur mince préféré, on peut citer les tissus lumineux de préférence selon la technologie Lightex® notamment de la société Brochier. Le tissu lumineux peut être blanc, teinté, avec ou sans motifs. Le tissu lumineux peut être :

- uniforme avec une armure textile standard,
- décoratif avec motif géométrique, figuratif créé dans le textile tissé (motif jacquard) ou par reprise d'un textile uniforme,
- informatif avec un logo, un message, une identité ou une signalétique.

Le tissu lumineux permet de réaliser de la lumière sur une partie ou sur toute sa surface.

On cite également en particulier comme milieu extracteur de lumière (de type feuille ou un film transparent ou semi-transparent):

- le(s) film(s) plastique(s) et de préférence ETFE (éthylène-tétrafluoroéthylène), FEP (éthylène-propylène fluoré), film(s) comportant des moyens de diffusion de la lumière,
- la feuille en verre (de préférence la moins absorbante possible, par exemple en verre clair, extraclair etc) d'épaisseur inférieure à 3mm ou même inférieure à 1mm, de préférence vitrage simple, feuille(s) comportant des moyens de diffusion de la lumière,

L'extraction de lumière (du milieu mince) se fait éventuellement sur une couche rapportée et/ou amovible (en contact optique avec une matière transparente par exemple et/ou avec les fibres optiques de préférence issues de la nappe d'injection).

En particulier, la feuille ou le film transparent ou semi transparent comporte comme moyens de diffusion de la lumière une couche diffusante déposée sur une face principale par exemple une couche avec une matrice (polymérique ou minérale typiquement) comportant des éléments diffusants (d'indice de réfraction distinct de l'indice de la matrice par exemple d'au moins 0,1) qui sont classiquement des particules (minérales de préférence).

L'extraction de lumière (du milieu mince) peut se faire typiquement par diffusion de surface (par texturation, abrasion de surface, etc) et/ou par gravure interne (laser).

En particulier la feuille ou le film transparent ou semi transparent peut comporter comme moyens de diffusion de la lumière une surface texturée, irrégulière, rugueuse ou une gravure interne. Ceci est réalisé typiquement par abrasion (mécanique etc) ou par attaque chimique

Le milieu extracteur de lumière peut être en plusieurs couches. On peut prévoir un assemblage (feuilletage) de l'un des éléments précités en particulier verre feuilleté, bi-couche verre - plastique, textile de fibres optiques et feuille de verre comme décrit dans la demande WO2008062141.

Le milieu extracteur de lumière peut être de toute forme (à coins, en arrondi ...).

Un autre exemple de milieu extracteur de lumière est formé par une structure fibreuse de préférence choisie parmi l'un au moins des éléments suivants (seul ou en combinaison) : un voile de fibres notamment de verre, de silice ou de fibres (organiques) synthétiques ou naturelles, un textile tissé, non tissé, tricoté. Cette structure fibreuse peut être appliquée notamment sur une face principale d'une feuille de verre ou plastique. Un tel milieu extracteur est décrit dans la demande de brevet WO2012/098330 en particulier dans ses exemples et de la page 12 à la page 14. Ces textiles non-tissés ou tissés comprennent des fibres (ou fils) minérales ou organiques, naturelles ou synthétiques. Ces fibres peuvent être choisies parmi :

- les fibres minérales telles que les fibres de verre ou de basalte,

- les fibres organiques d'origine naturelle, animale ou végétale, telles que la soie, la laine, le coton, le lin, le chanvre,

- les fibres organiques comprenant des polymères naturels ou synthétiques tels que la cellulose, les polyamides, les polyesters tels que le polyéthylène téréphtalate (PET) et le polybutylenterephthalate (PBT), le polychlorure de vinyle (PVC), les polyoléfines telles que le polypropylène (PP) et le polyéthylène (PE), les polyacryliques tels le polyméthacrylate de méthyle,

- des mélanges de fibres.

Le textile non-tissé est ici une feuille constituée de fibres réparties directionnellement ou par hasard qui n'ont pas été tissées (ou même tricotées), et dont la cohésion interne est assurée de différentes façons telle que par des méthodes mécaniques, physiques, chimiques et/ou par combinaison de ces divers procédés,

Si le milieu extracteur est plus épais que la nappe d'injection - notamment quand ce n'est pas un tissu utilisant les fibres optiques issues de la nappe d'injection- on préfère une différence d'épaisseur inférieure à 5mm, de préférence inférieure à 3mm.

La nappe d'injection de préférence en fibres optiques peut être :

- accolée au bord (tranche) du milieu extracteur, notamment quand ce n'est pas un tissu utilisant les fibres optiques issues de la nappe d'injection,
- ou mieux insérée dans un milieu transitoire d'indice de réfraction proche ou identique au milieu d'extraction (différence d'indice de réfraction de moins de 0,1 à 550nm de préférence) et/ou insérée dans le milieu d'extraction.

La distance entre la surface d'extrémité du collecteur et le milieu extracteur est par exemple comprise entre 5 et 15cm.

Le dispositif éclairant peut comporter un support de préférence choisi parmi :

- un système de suspension (tringle etc) sur lequel est suspendu le milieu extracteur de lumière,
- un châssis (cadre etc), sur lequel est tendu le milieu extracteur de lumière,
- une plaque (au sens large, par exemple un film, un panneau) sur laquelle est rapportée, voire fixée (collée de préférence) le milieu extracteur de lumière.

La plaque peut être :

- transparente, translucide, semi-transparente, colorée (blanche de préférence), réfléchissante, opaque (absorbante), fluorescente, et/ou
- de forme générale de préférence plane ou même courbe,
- et/ou souple ou de préférence rigide,
- et/ou conducteur thermique ou isolant thermique,
- et/ou de toute épaisseur.

On cite en particulier comme plaque (au sens large):

- plaque de plâtre,
- élément métallique (plan ou courbe) en forme d'applique par exemple,
- élément dans l'habitat ou intégrable dans l'habitat.

La présente invention sera mieux comprise à la lecture de la description détaillée ci-après des exemples de réalisation non limitatifs et des figures ci-jointes :

• La figure 2 illustre une vue partielle de coupe longitudinale d'un système optomécanique selon une première réalisation de l'invention,
• La figure 3 illustre une vue de détail de la figure 2,

- La figure 4 illustre une vue partielle de coupe longitudinale du système optomécanique de la première réalisation de l'invention (sans la source lumineuse sur son support),
- La figure 5 est une vue de dessus du système optomécanique (sans le collecteur optique) de la première réalisation de l'invention,
- La figure 6 illustre la réponse ponctuelle centrée du coupleur optique sur la base de douze rayons lumineux émis tous les 7° et issus d'une source ponctuelle centrée,
- La figure 7 montre le trajet de quelques rayons lumineux représentatifs issus d'une source ponctuelle centrée,
- La figure 8 montre une carte d'éclairement au niveau de la surface collectrice du collecteur et deux coupes orthogonales de la carte d'éclairement,
- La figure 1' illustre une vue partielle de coupe longitudinale d'un coupleur optique d'un système optomécanique selon une deuxième réalisation de l'invention,

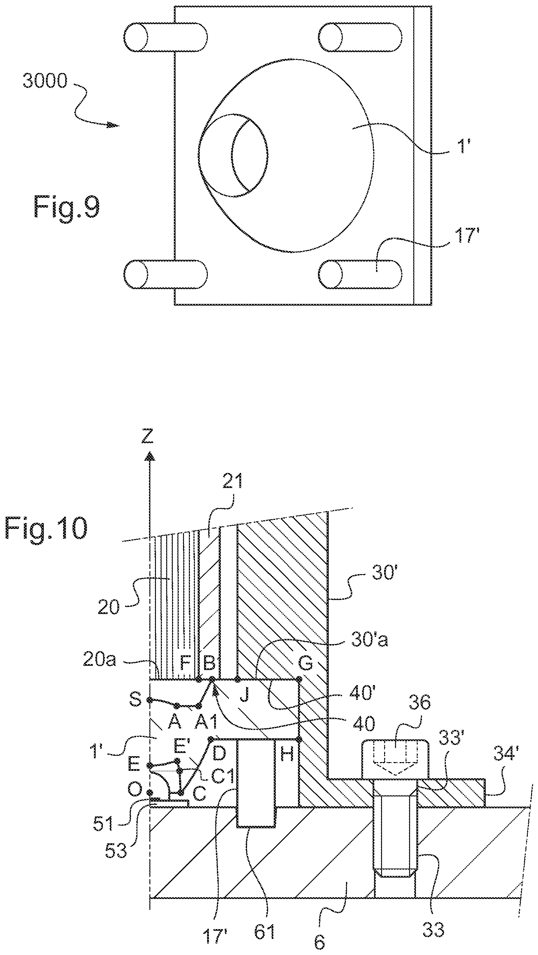

- La figure 9 illustre une vue de l'entrée d'un coupleur optique d'un système optomécanique selon une troisième réalisation de l'invention,
- La figure 10 illustre une vue partielle et de coupe du système optomécanique de la troisième réalisation de l'invention,

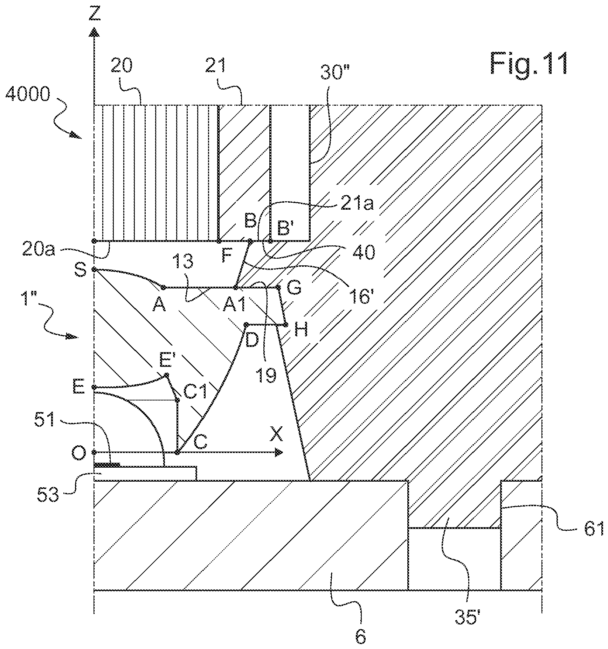

- La figure 11 illustre une vue partielle et de coupe du système optomécanique d'une quatrième réalisation de l'invention.

La figure 2 (et la figure 3 qui est une vue de détail) illustre une vue partielle de coupe longitudinale d'un système optomécanique 1000, pour milieu optique mince (nappe d'injection couplée à un tissu lumineux de préférence), selon une première réalisation de l'invention, le système comportant un coupleur optique 1 qui comporte un corps transparent en PMMA (polyméthacrylate de méthyle) d'indice optique n=1,5895 à 550nm, obtenu par moulage, coupleur à symétrie de révolution et d'axe central Oz, représenté et bien défini dans un plan (O, X, Z) correspondant au plan de coupe longitudinale, O étant le centre de l'entrée du coupleur optique 1.

La figure 3 montre la trace de chaque surface du coupleur optique dans le plan de coupe longitudinale et on définit des points représentatifs pour chaque portion, uniquement dans le quadrant positif du plan de coupe pour souci de clarté.

Le coupleur optique 1 comprend :

- une lentille 10 d'axe central coïncidant avec l'axe Oz, ici à symétrie de révolution, comportant :

  - une face d'entrée 11 convexe, définie par une cote centrale, sur l'axe Oz, dite $h_e$, et de cote radiale $R_1$, face 11 de sommet E $(0, h_e)$ et de contour d'extrémité (périmètre extérieur) circulaire passant par l'extrémité E1 $(R_1, z_{E1})$,
  - une face de sortie centrale 12 convexe, définie par une cote centrale, sur l'axe Oz, dite H et de cote radiale $R_A$, face 12 de sommet S $(0, H)$ et de contour d'extrémité (périmètre extérieur) circulaire passant par l'extrémité A $(R_A, z_A)$,
  - une face de sortie périphérique 13, jointe à la face de sortie centrale 12, de préférence sans saut, de préférence plane (ou en variante tronconique ou même concave), et en retrait de la face de sortie centrale, ici surface annulaire de contour d'extrémité (périmètre extérieur) circulaire passant par l'extrémité A1 et face 13 définie en outre par un autre point caractéristique I détaillé ultérieurement,

- une cavité 10a, d'axe de révolution coïncidant avec l'axe Oz, comportant :

  - un fond 110 composé de la face d'entrée 11, prolongé ici par un aplat 11a formant une surface annulaire de contour d'extrémité (périmètre extérieur) circulaire et défini aussi par une extrémité E' $(R_{E'}, $ profondeur $h_{E'})$,
  - et une surface latérale d'entrée 14, évasée en direction de l'entrée du coupleur, avec trois portions de surface tronconiques jointes par leurs extrémités, le petit diamètre de l'une définissant le grand diamètre de l'autre, d'axes de révolution alignés sur l'axe Oz, l'intersection de ces trois portions avec le plan de coupe définissant trois segments linéaires dans le quadrant positif du plan de coupe,
  - premier segment 14a (le plus écarté de l'axe Oz) relié à l'extrémité E' de l'aplat (ou en variante à la face centrale d'entrée E en l'absence d'aplat), passant l'extrémité C1 $(R_{C1}, z_{C1})$, donc la plus proche de l'entrée du coupleur pour ce premier segment,
  - deuxième segment 14b relié au premier segment 14a, de préférence passant un point extrême C2 $(R_{C2}, z_{C2})$ le plus proche de l'entrée du coupleur pour ce deuxième segment, plus long que le premier segment de préférence,
  - et ici un troisième segment 14c, plus court que les autres, débouchant sur l'axe X passant l'extrémité C $(R_C, 0)$,

- une surface réflectrice périphérique 15, entourant la lentille et la cavité, d'axe de révolution coïncidant avec l'axe Oz, apte à une réflexion totale interne des rayons, dits obliques, réfractés par la surface latérale d'entrée 14, surface réflectrice périphérique 15 s'étendant au-delà de la face d'entrée 11 en direction de la sortie du coupleur optique, de l'extrémité la plus basse C jusqu'à l'extrémité la plus haute D ($R_D$, $z_D$).

Le système d'injection 1000 comporte aussi un collecteur optique 20 d'axe central coïncidant avec l'axe Oz, ici à symétrie de révolution (en variante sensiblement ovale, hexagonale), de cote radiale $R_{INT}$ millimétrique, comportant :

- des fibres optiques 20 définies par une ouverture numérique ON donnée ici égale à 0,5 et définissant une surface collectrice 20a,
- et comportant une enveloppe 21, sous forme d'une bague métallique détaillée ensuite, ayant une surface d'extrémité donnée 21a,

la face de sortie centrale et la face de sortie périphérique étant espacées de la surface collectrice 20a, la distance centrale $e_F$ sur l'axe Oz entre le collecteur optique 20 et la face de sortie centrale 12 étant non nulle et inférieure à 0,6mm.

Les dimensions du design du coupleur optique 1 répondent de préférence aux contraintes liées à l'étape d'injection plastique : angle d'entrée $\beta > 2°$ pour le démoulage. La dépouille mini est de 3° pour les parois de préférence.

Le système optomécanique 1000 comporte en outre une surface de butée 40 de la surface d'extrémité 21a.

La surface de butée 40 est ici jointe à la face de sortie périphérique 13, à l'opposé de la face de sortie centrale. L'enveloppe 21a est en butée sur une largeur BB' supérieure à 0,4mm.

La surface de butée 40, à symétrie de révolution est plane, annulaire ou en variante tronconique (évasée en direction de la sortie du système).

Ici plus précisément, le corps transparent (donc le coupleur 1) comporte une rampe 16 à symétrie de révolution ici tronconique, évasé en direction de la sortie du système (ou en variante toute autre symétrie suivant l'axe Oz) de préférence tel que l'angle de sortie $\beta' \geq 20°$ pour les contraintes de démoulage.

On repère dans le quadrant positif :

- le bord interne B de la surface de butée 40,
- le bord F de la surface d'extrémité 21a de cote radiale $R_{INT}$, autrement le bord externe de la surface collectrice 20a,
- le bord externe B' de la surface de butée 40 (en contact avec le contour extérieur de la surface d'extrémité 21a),
- le point représentatif M ($R_M$, $h_e$) sur la rampe 16 et de même cote en Z que S.

En variante, on tolèrerait que le contour d'extrémité A1 de la face de sortie périphérique (ne soit pas circulaire, idem pour B) pour peu que les rayons lumineux réfractés dans cette zone extrême n'entrent pas dans le collecteur ou même que cette zone extrême ne reçoive pas ou peu de rayons lumineux.

Aussi, en particulier la zone ici tronconique entre M et B et même entre A1 et M peut être en fait de toute forme (mais restant démoulable de préférence).

La surface d'extrémité 21a de l'enveloppe 21 dépasse de préférence de la surface de butée 40. Ici la surface d'extrémité 21a fenêtre (masque donc) une fraction la plus extérieure de la face de sortie périphérique 13, entre I (qui est en face de F) et A1 est ici de 0,4mm.

Aussi, en particulier la zone entre I et A1 peut être en variante de toute forme (mais restant démoulable de préférence) ne réinjectant pas des rayons lumineux parasites dans le collecteur (pas assez collimatés ou source d'hétérogénéité spatiale).

Le système d'injection 1000 comporte aussi un organe d'alignement 30 du collecteur optique 20 au coupleur optique 1, ici formé d'un seul tenant avec le coupleur optique 1 (une pièce) et détaillé ultérieurement.

Le tableau ci-après établit les cotes des points remarquables du coupleur, de l'organe d'alignement, de la surface de butée.

| entrée | X (mm) | Z (mm) |
|--------|--------|--------|
| LED | 0 | -0,24 |
| E | 0 | 1,41 |
| E1 | 1,33 | 1,63 |
| E' | 1,40 | 1,63 |
| C | 1,58 | 0,00 |
| C1 | 1,53 | 1,13 |

(suite)

| entrée | X (mm) | Z (mm) |
|---|---|---|
| C2 | 1,56 | 0,17 |
| D | 3,11 | 2,73 |

| sortie | X (mm) | Z (mm) |
|---|---|---|
| S | 0 | 3,86 |
| I | 2,50 | 3,53 |
| A | 1,37 | 3,53 |
| A1 | 2,90 | 3,53 |
| B | 3,07 | 4,43 |
| M | 3,00 | 3,86 |

Soit avec une tolérance de +/-100µm liée au procédé d'injection plastique :

| entrée | X (mm) | Z (mm) |
|---|---|---|
| LED | 0 | -0,2 |
| E | 0 | 1,4 |
| E1 | 1,3 | 1,6 |
| E' | 1,4 | 1,6 |
| C | 1,6 | 0,0 |
| C1 | 1,5 | 1,1 |
| C2 | 1,6 | 0,2 |
| D | 3,1 | 2,7 |

| sortie | X (mm) | Z (mm) |
|---|---|---|
| S | 0 | 3,9 |
| I | 2,5 | 3,5 |
| A | 1,4 | 3,5 |
| A1 | 2,9 | 3,5 |
| B | 3,1 | 4,4 |
| M | 3,0 | 3,9 |

Le tableau ci-après résume les paramètres clés optimaux du système 1000 (en mm) :

| | |
|---|---|
| H | 3,9 |
| W ($2R_D$) | 6,2 |
| $e_i$ | 0,2 |
| $e_f$ | 0,6 |
| $R_{INT}$ | 2,5 |
| $R_{A1}$ | 2,1 |
| $R_A$ | 1,4 |
| $R'_1$ | 0,1 |

(suite)

| | |
|---|---|
| $R_1$ | 1,3 |
| $R_B$ | 1,5 |
| $R_C$ | 1,6 |
| hauteur rampe 16 | 0,9 |
| BB' | 1,07 |

L'équation de la surface de la face d'entrée 11 s'écrit :

$$z(r) = \frac{r^2}{R\left(1 + \sqrt{1 - (1+k)\frac{r^2}{R^2}}\right)} + A_4 r^4 + A_6 r^6 + A_8 r^8 + \cdots$$

Les coefficients optimaux sont définis dans le tableau suivant :

| Face d'entrée convexe | | | | | |
|---|---|---|---|---|---|
| Coefficients asphériques | Constante conique (k) | R (mm) | $A_4$ | $A_6$ | $A_8$ |
| | 0 | 4,50 | 0,01 | -0,001 | 0 |

L'équation de la surface de la face centrale de sortie 12 s'écrit :

$$z(r) = \frac{r^2}{R\left(1 + \sqrt{1 - (1+k)\frac{r^2}{R^2}}\right)} + A_4 r^4 + A_6 r^6 + A_8 r^8 + \cdots$$

Les coefficients optimaux sont définis dans le tableau suivant :

| Face centrale de sortie | | | | | |
|---|---|---|---|---|---|
| Coefficients asphériques | Constante conique (k) | R (mm) | $A_4$ | $A_6$ | $A_8$ |
| | 0 | 3,00 | 0 | 0 | 0 |

La surface réflectrice périphérique 15 s'écarte de la surface latérale d'entrée 14 et de la face d'entrée 11 en direction de la sortie du coupleur 1. Elle est de préférence de cote $z_D$ maximale selon Oz inférieure à la cote $z_A$ de la face de sortie centrale 12 ou de la cote $Z_l$ et/ou $Z_{A1}$. Elle est supérieure à H/2. La distance minimale $h_m$, dite d'entrée matière, entre ladite surface réflectrice périphérique 15 et la face de sortie périphérique 13 est supérieure à 0,8mm, ici distance entre D et A1. L'équation de la surface réflectrice périphérique 15 s'écrit

$$z(r) = \frac{r^2}{R\left(1 + \sqrt{1 - (1+k)\frac{r^2}{R^2}}\right)} + A_4 r^4 + A_6 r^6 + A_8 r^8 + \cdots$$

Les coefficients optimaux sont définis dans le tableau suivant :

| surface réflectrice périphérique | | | | | |
|---|---|---|---|---|---|
| Coefficients asphériques | Constante conique (k) | Cote radiale (R mm) | $A_4$ | $A_6$ | $A_8$ |
| | -1 | 1,25 | -0,00569 | 0,0001373 | 0,00002663 |

La source de lumière 50 est une diode électroluminescente à émission lambertienne (en champ lointain) de zone émissive 51 carrée de largeur L égale à 1mm, centrée sur l'axe Oz surmontée d'une optique primaire en forme de dôme 52, fixé (source via une embase 53 sur la face principale d'un support 60 qui est une carte à circuit imprimé de préférence métallique pour favoriser la dissipation thermique de la chaleur par conduction thermique.

Il s'agit par exemple de la Luxeon Rebel ES (réf LXW8-PW35) de Philips Lumileds dont le flux lumineux nominal à 25°C et 350mA est de 114lm pour une température de couleur de 3500K. La distance entre le dôme 52 et E est de 170$\mu$m et entre le dôme et C est de 300$\mu$m environ. Le dôme est inséré très largement dans la cavité 10a pour que le coupleur puisse récupérer un maximum de rayons lumineux.

La face d'entrée 11 et la face de sortie centrale 12 sont aptes à orienter ou à maintenir des rayons lumineux, dits centraux, réfractés par la face d'entrée et la face de sortie centrale, dans l'ouverture numérique ON.

La surface réflectrice périphérique 15 et la face de sortie périphérique 13 sont aptes à orienter ou à maintenir des rayons lumineux, dits obliques, réfractés par la surface latérale d'entrée, dans l'ouverture numérique ON. L'extrémité D est le plus haut possible pour récupérer au mieux les rayons.

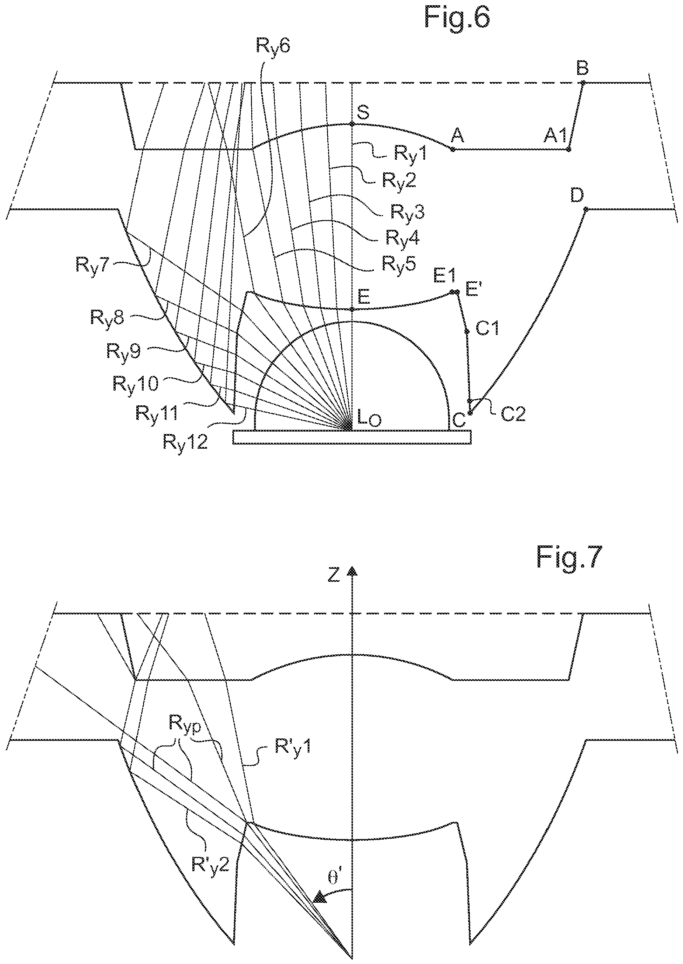

La figure 6 illustre la réponse ponctuelle centrée du coupleur optique sur la base de douze rayons lumineux tous les 7° issus de la LED 50 obtenu par simulation du système optique avec le logiciel LightTools de la société Synopsis.

Les caractéristiques des rayons centraux et latéraux sont indiquées dans le tableau suivant :

| Rayons centraux | | Angle d'attaque par rapport à Z (°) | | |
|---|---|---|---|---|
| Référence | angle d'injection par rapport à Z (°) | Fond de la cavité d'entrée | Face de sortie centrale | Face de sortie périphérique |
| Ry1 | 0 | 0,000 | 0,000 | - |
| Ry2 | 7 | 3,419 | 1,496 | - |
| Ry3 | 14 | 6,633 | 2,659 | - |
| Ry4 | 21 | 9,365 | 3,014 | - |
| Ry5 | 28 | 11,125 | 1,630 | - |
| Ry6 | 35 | 10,809 | - | 17,343 |
| Rayons latéraux | | Angle d'attaque par rapport à Z (°) | | |
| Référence | angle d'injection par rapport à Z (°) | Surface latérale d'entrée | Surface réflectrice périphérique | Face de sortie périphérique |
| Ry7 | 42 | 55,188 | 10,857 | 17,421 |
| Ry8 | 49 | 64,777 | 10,705 | 17,172 |
| Ry9 | 56 | 68,619 | 8,432 | 13,479 |
| Ry10 | 63 | 72,669 | 6,893 | 10,998 |
| Ry11 | 70 | 76,874 | 5,677 | 9,046 |
| Ry12 | 77 | 79,231 | 2,642 | 4,201 |

On remarque en particulier le rayon Ry6 qui est réfracté par l'aplat 11a puis dans la face de sortie périphérique 13 en s'écartant de l'axe Z et arrivant sur la surface 20a du collecteur optique comme le rayon Ry8 qui à l'inverse est un rayon oblique ramené vers l'axe Z. Par ailleurs, le rayon Ry7 est l'un des derniers rayons obliques entrant dans le collecteur optique 20. Ces mélanges participent à l'uniformité spatiale du flux lumineux injecté dans le collecteur.

La figure 7 montre le trajet de quelques rayons lumineux latéraux représentatifs issus d'une source ponctuelle centrée Lo.

Ry'1 émis à un angle $\theta$' est reçu par le collecteur 20. Ry'2 est reçu aussi par le collecteur 20. Sont également représentés trois rayons perdus Ryp intermédiaires allant dans le flanc du corps 1 ou arrivant sur l'enveloppe 21 débordante du collecteur 20.

La figure 8 montre la carte d'éclairement (éclairement en lux) en fonction de la position radiale (en mm), carte simulée au niveau de la surface collectrice 20 a de $R_{INT}$ ici égale à 2,5mm avec des fibres optiques de diamètre 500$\mu$m et montre aussi deux coupes orthogonales de la carte d'éclairement. La figure 8 est obtenue avec le logiciel LightTools.

L'éclairement est uniforme sur toute la surface collectrice. Les quelques pics observés ont une dimension spatiale si faible par rapport à la dimension du coeur des fibres optiques qu'ils sont moyennés à l'échelle du diamètre de la fibre.

L'alignement optique et la fixation des pièces 1, 20 sont décrits maintenant à l'aide des figures 2 à 5.L'organe d'alignement 30 comporte un manchon cylindrique de diamètre d'entrée φ latérale à la surface de butée 40, s'élargissant en direction de la sortie et comportant trois nervures de serrage à 120° 31a, 31b, 31c. L'enveloppe 21 du collecteur est sertie (rétrécie) 21b sur une première longueur sans contact avec la paroi interne 31a du manchon 30 puis l'enveloppe s'élargit ensuite 21c ($R'_{INT}$ < $R_{INT}$) définissant une hauteur de serrage par contact local avec la paroi interne du manchon 32 et émerge du manchon notamment pour faciliter son montage démontage.

Le corps du coupleur optique, prolongé au-delà du coupleur optique donc de sa zone à fonctionnalité optique, repose sur le support de source PCB 6, 61, via des surfaces d'appui 34 sous forme de deux ailettes de part et d'autre de la lentille, de face inférieure en saillie par rapport à la cavité 10a et espacée(s) de la surface réflectrice périphérique 15. Ces ailettes 34 comportent deux tenons 35 pour un autocentrage sur le PCB 6, 61 et des éjecteurs 33 (plus éloignés de la lentille que les tenons 35) pour une fixation par vis et écrou 36 au PCB 6. Quatre nervures de renfort 37 sont ajoutées entre le manchon 30 et les ailettes 34.

Le collecteur 20, 21 est défini par les dimensions spécifiées dans le tableau suivant (diamètre intérieur et diamètre extérieur avec l'enveloppe 21).

|  | diamètre intérieur (mm) | diamètre extérieur (mm) |
|---|---|---|
| Zone non sertie | 5,85 | 8 |
| Zone sertie | 5 | 7,15 |

On réalise des mesures optiques à l'emplacement de la surface collectrice à l'aide d'une sphère intégrante.

On utilise une LED qui est la Luxeon Rebel ES (réf LXW8-PW35) de Philips Lumileds dont le flux lumineux nominal à 25°C et 350mA est de 114lm pour une température de couleur de 3500K. Avec le coupleur 1' on obtient un flux au niveau de la surface collectrice de 61 lm soit une excellente efficacité. Le collecteur est un toron de fibres optiques de 500μm de diamètre et au nombre de 75 s'organisent en sortie de l'enveloppe en une nappe d'injection de fibres optiques ici en une couche. $R_{INT}$ va de préférence dans une gamme de 2,2mm à 2,5mm. Dans la nappe d'injection la distance centre à centre entre deux fibres optiques voisines est par exemple de 0,67mm. L'espace vide entre deux fibres optiques voisines est par exemple de 0,18mm.

La nappe d'injection (en sortie de l'enveloppe 21) débouche sur le milieu extracteur de lumière mince (non représenté) qui est ici un tissu lumineux (ici blanc, sans motif) qui comprend un textile tissé formé par les fibres optiques de la nappe d'injection tissées dans un textile de polyester de 167 dTex (24%), fibres.de PMMA (76%), fibres optiques abrasées en surface extérieure pour la diffusion de la lumière et tissées dans un textile.

La surface extractrice choisie a une densité de fibres optiques de 15 fibres/cm et est rectangulaire de 29,7cm x 10cm et d'épaisseur 0,5 mm. Il s'agit du produit Lightex® blanc de la société Brochier Technologies.

Plus précisément, on duplique le système d'injection 1000 sur les deux bords latéraux opposés de la surface extractrice en mettant ainsi deux systèmes sur chaque bord. Le tissu lumineux est posé sur une plaque de plâtre (BA13) côté blanc (de préférence). La luminance mesurée est de 1400 Cd/m² environ.

Par ailleurs l'uniformité spatiale de la luminance est excellente car le coefficient de variation de la luminance donné par la formule $\sigma_L$/<L> ou $\sigma_L$ est l'écart type de la luminance à la normale et <L> la luminance à la normale moyenne, est inférieur à 20%. Ce coefficient de variation de la luminance est calculé à partir des clichés de luminance sur une surface élémentaire de 1cm² pris avec goniophotomètre, tel que l'appareil Lumicam de la société Instrument Systems, clichés répétés sur toute la surface du textile.

Alternativement (ou cumulativement) on peut accoler ou de préférence insérer la nappe d'injection des fibres optiques dans un film transparent, (blanc ou teinté éventuellement) notamment verre et/ou plastique (PMMA pour polyméthacrylate de méthyle, PC pour polycarbonate, PU pour polyuréthane) couplé à la nappe d'injection et comportant des moyens de diffusion de la lumière.

La figure 1' illustre une vue partielle de coupe longitudinale d'un coupleur optique 1a d'un système optomécanique 2000 selon une deuxième réalisation de l'invention différant surtout par la forme concave de la face de sortie périphérique 13a jointe à la face de sortie centrale et se prolongeant (sans discontinuité) ainsi jusqu'à la butée de bord interne B. On préfère que le point M soit agencé sous l'enveloppe du collecteur et que le point I soit en retrait par rapport au point S.

Dans ce mode de réalisation on considère que la face de sortie périphérique 13a comporte aussi une partie 16a entre M et A2 menant jusqu'à la surface de butée (bord B confondu avec A2).

Par ailleurs l'enveloppe 21 du collecteur présente un bord externe 21a tronconique (en biseau) en appui sur la surface de butée 40 ici tronconique.

La figure 9 illustre une vue schématique de l'entrée d'un coupleur optique d'un système optomécanique 3000 selon une troisième réalisation de l'invention dans lequel l'organe d'alignement 30' et le coupleur optique 1' sont deux pièces distinctes.

La figure 10 illustre une vue de coupe longitudinale (et partielle) du système optomécanique 3000 de la troisième réalisation de l'invention.

Le coupleur optique 1' est doté de quatre pieds 17' pour l'auto centrage, éventuellement montés en force grâce à leur usinage conique sur le support de source PCB 60 percé à cet effet (trous borgnes 61 ou traversants).

L'organe d'alignement 30' repose sur une extension 40' latérale du coupleur 1' au voisinage de la surface de butée 40, extension entre les points J et G. Le coupleur 1' a un flanc GH droit ou oblique. L'organe d'alignement 30' se prolonge le long du flanc (contre ou en étant espacé) jusqu'à la carte PCB 6 et comporte alors une ou des ailettes 34' dotées d'éjecteurs 33' pour fixation (par vis 36...) au PCB 6. L'organe d'alignement 30' vient également bloquer le coupleur optique 1' prépositionné.

La figure 11 illustre une vue partielle et schématique de coupe du système optomécanique 4000 selon une quatrième réalisation de l'invention dans lequel l'organe d'alignement 30" et le coupleur optique 1" sont deux pièces distinctes.

La rampe 16' de A1 au bord B de la surface de butée 40 appartient à l'organe d'alignement 30". Au-delà de A1 le coupleur est prolongé en forme d'oreille. La face de sortie périphérique 13 est prolongée par une surface d'appui 19 pour l'organe d'alignement.

Pour son montage, le bord de la lentille, biseauté (flanc GH), progresse en glissant sur une nervure lisse de l'organe d'alignement avant de venir se loger dans son emplacement.

L'organe d'alignement 30' se prolonge jusqu'à la carte PCB 6 par une ou des ailettes 34' dotées :

- d'un système d'autocentrage de type tenon 35',
- d'éjecteurs (non montrés) pour fixation (par vis) au PCB 6.

## Revendications

1. Système optomécanique d'injection de lumière (1000, 2000, 3000, 4000) notamment pour milieu optique mince, le système comportant :

   - un coupleur optique (1, 1a, 1") qui comporte un corps d'axe Oz, O étant le centre de l'entrée du coupleur optique, comprenant d'un seul tenant :

     - une lentille (10) d'axe coïncidant avec l'axe Oz, de largeur maximale W de préférence subcentimétrique comportant :

       - une face d'entrée (11) convexe de cote radiale $R_1$,
       - une face de sortie centrale (12) convexe, définie par une cote centrale, sur l'axe Oz, dite H de préférence inférieure à W et de cote radiale RA,
       - une face de sortie périphérique (13, 13a) qui comprend une partie jointe à la face de sortie centrale, partie qui est plane, notamment annulaire, ou qui est concave ou qui est tronconique et évasée en direction de la sortie du système,

     - une cavité (10a), d'axe coïncidant avec l'axe Oz, comportant un fond (110) incluant la face d'entrée (11) et comportant une surface latérale dite d'entrée (14,14a à 14c),
     - une surface réflectrice périphérique (15), entourant la lentille et la cavité, d'axe coïncidant avec l'axe Oz, apte à une réflexion totale interne de rayons lumineux réfractés par la surface latérale d'entrée, surface réflectrice périphérique s'étendant au-delà de la face d'entrée (11) en direction de la sortie du coupleur optique,

   - un collecteur optique (20) d'axe coïncidant avec l'axe Oz, avec en entrée, une surface dite collectrice (20a) en regard de la face de sortie centrale (12), de cote radiale RINT millimétrique, et une ouverture numérique ON inférieure à 1, le collecteur (20) comportant une enveloppe (21) ayant une surface d'extrémité donnée (21a), la face de sortie centrale (12) et la face de sortie périphérique (13, 13a) étant espacées de la surface collectrice (20a), le collecteur optique comportant un toron de fibres optiques, fibres optiques de diamètre inférieur à 1,5mm,
   - un organe d'alignement (30, 30', 30") du collecteur optique (20) au coupleur optique, le coupleur optique et l'organe d'alignement étant d'un seul tenant ou étant fixés entre eux directement ou indirectement,

la distance centrale $e_F$ sur l'axe Oz entre la surface collectrice et la face de sortie centrale (12) étant non nulle et inférieure à 5mm,
et le système optomécanique comportant une surface de butée (40) de la surface d'extrémité (21a).

2. Système optomécanique (1000, 2000, 3000, 4000) selon la revendication précédente **caractérisé en ce que** le fond (110) de la cavité, la face de sortie centrale (12) et la face de sortie périphérique (13) sont tels que des rayons lumineux réfractés par le fond de la cavité, notamment issus d'un point sur l'axe Oz, sont réfractés par la face de sortie périphérique, et **en ce que** de préférence le coupleur optique est tel que des rayons lumineux, notamment issus d'un point sur l'axe Oz, d'abord réfractés par la surface latérale d'entrée (14) puis sur la surface réflectrice périphérique (15) se retrouvent au niveau de la surface collectrice (20a) dans une zone commune à des rayons lumineux notamment issus d'un point sur l'axe Oz et d'abord réfractés par le fond de la cavité.

3. Système optomécanique (1000, 2000, 3000, 4000) selon l'une des revendications précédentes **caractérisé en ce que** $R_{INT}$ est inférieure à 3,0mm et de préférence supérieure ou égale à 1,5mm et mieux de 2,2mm à 2,6mm.

4. Système optomécanique (1000, 2000, 3000, 4000) selon l'une des revendications précédentes **caractérisé en ce que** le coupleur optique (1 à 1") est défini par les dimensions suivantes :

    - $1,88R_{INT} < W < 3,1R_{INT}$,
    - $0,41R_{INT} < R_A < 0,68R_{INT}$,
    - $0,4R_{INT} < R_1 < 0,66R_{INT}$.

5. Système optomécanique (1000, 2000, 3000, 4000) selon l'une des revendications précédentes **caractérisé en ce que** le coupleur optique (1 à 1") est défini par les dimensions suivantes :

    - W inférieure à 10mm, de préférence inférieure à 7mm,
    - H inférieure à W, notamment H supérieure à 3,6mm et inférieure à 4mm,
    - RA supérieure à 1,2mm et inférieure à 1,6mm,
    - R1 supérieure à 1,2mm et inférieure à 1,6mm,
    - hE', profondeur maximale du fond (110, 11a) supérieure à 1,4mm et inférieure à 1,8mm.

6. Système optomécanique (1000, 2000, 3000, 4000) selon l'une des revendications précédentes **caractérisé en ce que** la surface d'extrémité (21a) dépasse de la surface de butée (40) de bord interne B, et la surface d'extrémité (21a) est en regard de la face de sortie périphérique (13, 13a) et de préférence $0,30R_{INT} < R_I < 0,60R_{INT}$ avec $R_I$ qui est la distance radiale entre A et I où I est la projection selon Oz sur la face de sortie périphérique (13) du bord interne F de l'enveloppe (21) et où A est l'extrémité latérale de la face centrale de sortie (12).

7. Système optomécanique (2000) selon l'une des revendications précédentes **caractérisé en ce que** la surface de butée (40) est tronconique et la surface d'extrémité (21a) est de forme complémentaire à la surface de butée.

8. Système optomécanique (1000, 2000, 3000, 4000) selon l'une des revendications précédentes **caractérisé en ce que** la surface réflectrice périphérique (15) s'écarte de la surface latérale d'entrée (14) et de la face d'entrée (11) en direction de la sortie du coupleur et de préférence :

    - de cote zD maximale selon Oz supérieure à H/2 et de préférence inférieure à la cote minimale zA de la face de sortie centrale (12) et/ou à la cote en z de la face de sortie périphérique (13, 13a),
    - et/ou
    - avec la distance minimale hm, dite d'entrée matière, entre ladite surface réflectrice périphérique (15) et la face de sortie périphérique (13, 13a) qui est supérieure à 0,8mm.

9. Système optomécanique (1000, 2000, 3000, 4000) selon l'une des revendications précédentes **caractérisé en ce que** sur au moins une portion de surface (14a) la plus proche du fond (110) de la cavité, la surface latérale d'entrée (14) est tronconique et évasée en direction de l'entrée du coupleur.

10. Système optomécanique (1000, 2000, 3000, 4000) selon l'une des revendications précédentes **caractérisé en ce que** l'organe d'alignement (30) qui est de préférence à symétrie de révolution et d'axe coïncidant avec l'axe Oz, loge le collecteur optique (20), et **en ce que** le corps et/ou l'organe d'alignement intègre la surface de butée (40) et de préférence le corps (1) intègre l'organe d'alignement (30).

**11.** Système optomécanique (1000, 2000, 3000, 4000) selon l'une des revendications précédentes **caractérisé en ce qu'**il comprend une source de lumière (51), centrée sur l'axe Oz et à une distance $e_i$ sur l'axe Oz inférieure à 0,5mm, source sur un support dit de source (6), via une éventuelle embase (53), et **en ce que** le coupleur optique (1, 1a, 1') intégrant de préférence l'organe d'alignement (30), repose sur le support de source (60), via une ou des surfaces d'appui (34, 17') du coupleur, notamment en saillie par rapport à la cavité (10a), de préférence surface(s) d'appui espacée(s) de la surface réflectrice périphérique (15) ou **en ce que** le coupleur optique (1") est assemblé dans l'organe d'alignement (30") qui repose sur le support de source (6), via une ou des aires d'appui (34'), notamment en saillie par rapport à la cavité (10a), de préférence aire(s) d'appui espacée(s) de la surface réflectrice périphérique (15).

**12.** Système optomécanique (1000, 2000, 3000, 4000) selon l'une des revendications précédentes **caractérisé en ce que** le coupleur optique (1, 1a ,1'), intégrant de préférence l'organe d'alignement (30) est solidaire du support de source (6), de préférence le support de source (6) et une ou des zones latérales du coupleur optique (34) comportent des moyens d'assemblage complémentaires (35, 61) et éventuellement des moyens de verrouillage additionnels (33, 36) ou **en ce que** le coupleur optique (1") est assemblé dans l'organe d'alignement, notamment espacé du support de source, l'organe d'alignement (30") reposant sur le support de source (6) et étant solidaire du support de source (6) et de préférence une ou des aires latérales et le support de source comportent des moyens d'assemblage complémentaires (35', 61) et éventuellement des moyens de verrouillage additionnels.

**13.** Système optomécanique (1000, 2000, 3000, 4000) selon l'une des revendications précédentes **caractérisé en ce que** les fibres optiques s'organisent en sortie de l'enveloppe (21) en au moins une nappe d'injection mince, notamment d'épaisseur inférieure à 2mm, débouchant sur un milieu extracteur de lumière mince, notamment d'épaisseur inférieure à 5mm.

**14.** Ensemble comportant le coupleur optique et l'organe d'alignement du système optomécanique selon l'une des revendications 1 à 13, qui sont solidaires, éventuellement en une pièce, le corps ou l'organe d'alignement intégrant la surface de butée apte à la mise en appui du collecteur optique.

**15.** Coupleur optique (1 à 1") du système optomécanique selon l'une des revendications 1 à 13, et de préférence intégrant la surface de butée apte à la mise en appui du collecteur optique.

**16.** Dispositif éclairant notamment mince comportant le système optomécanique (1000 à 4000) selon l'une des revendications 1 à 13, **caractérisé en ce qu'**il comprend le milieu extracteur de lumière notamment mince qui est choisi parmi au moins l'un des éléments suivants :

  - des fibres optiques d'au moins une nappe d'injection en fibres optiques de préférence issues du collecteur, fibres optiques abrasées en surface pour la diffusion de la lumière, fibres éventuellement au moins partiellement dans ou sur une matière transparente ou semi-transparente, notamment verre ou plastique,
  - un tissu lumineux comportant un textile tissé comprenant des fibres optiques tissées dans un textile, fibres optiques d'au moins une nappe d'injection en fibres optiques de préférence issues du collecteur, fibres optiques abrasées en surface pour la diffusion de la lumière,
  - une structure fibreuse, choisie de préférence parmi l'un au moins des éléments suivants : un voile de fibres, un textile tissé, non tissé, tricoté, structure fibreuse appliquée notamment sur une face principale d'une feuille de verre ou plastique,
  - au moins une feuille ou un film transparent ou semi-transparent, notamment verre et/ou plastique, couplé à une nappe d'injection en fibres optiques, de préférence issues du collecteur, film comportant des moyens de diffusion de la lumière.

**17.** Dispositif éclairant selon la revendication précédente **caractérisé en ce qu'**il comporte un support, de préférence choisi parmi :

  - un système de suspension, notamment une tringle,
  - un châssis,
  - une plaque sur laquelle est rapportée, voire fixée, le milieu extracteur de lumière, notamment une plaque de plâtre ou une plaque transparente, une plaque translucide.

**EP 3 027 962 B1**

**Patentansprüche**

1. Optomechanisches System zum Injizieren von Licht (1000, 2000, 3000, 4000) insbesondere für dünnes optisches Element, wobei das System Folgendes umfasst:

   - einen Opto-Koppler (1, 1a, 1") , der einen Körper mit Achse Oz umfasst, wobei O die Mitte des Eingangs des Opto-Kopplers ist, der aus einem Stück Folgendes umfasst:

     - eine Linse (10) mit einer Achse, die mit der Achse Oz übereinstimmt, mit maximaler Breite W, die bevorzugt subzentrimetrisch ist, die Folgendes umfasst:

       - eine konvexe Eingangsfläche (11) mit radialem Maß $R_1$,
       - eine konvexe zentrale Ausgangsfläche (12), die von einem zentralen Maß auf der Oz-Achse definiert ist, H genannt, die bevorzugt kleiner ist als W und mit radialem Maß RA,
       - eine umfängliche Ausgangsfläche (13, 13a), die ein Teil umfasst, das an die zentrale Ausgangsfläche angefügt ist, wobei das Teil flach, insbesondere ringförmig ist, oder konkav ist oder kegelstumpfförmig und in Richtung des Ausgangs des Systems aufgeweitet ist,

     - einen Hohlraum (10a) mit Achse, die mit der Achse Oz übereinstimmt, der einen Boden (110) umfasst, der die Eingangsfläche (11) aufweist und eine seitliche Oberfläche, Eingangsoberfläche (14, 14a bis 14c) genannt, umfasst,
     - eine umfängliche reflektierende Oberfläche (15), die die Linse und den Hohlraum umgibt, mit Achse, die mit der Achse Oz übereinstimmt, die zu einer totalen internen Reflexion der Lichtstrahlen geeignet ist, die von der seitlichen Eingangsoberfläche gebrochen werden, wobei sich die umfängliche reflektierende Oberfläche über die Eingangsfläche (11) in Richtung des Ausgangs des Opto-Kopplers erstreckt,

   - einen optischen Sammler (20) mit Achse, die mit der Achse Oz übereinstimmt, mit, am Eingang, einer sogenannten Sammeloberfläche (20a) gegenüber der zentralen Ausgangsfläche (12), mit millimetrischem radialem Maß RINT und einer numerischen Apertur ON kleiner als 1, wobei der Sammler (20) einen Mantel (21) umfasst, der eine gegebene Endoberfläche (21a) hat, wobei die zentrale Ausgangsfläche (12) und die umfängliche Ausgangsfläche (13, 13a) von der Sammeloberfläche (20a) beabstandet sind, wobei der optische Sammler einen Ring aus Lichtleitfasern, Lichtleitfasern mit einem Durchmesser kleiner als 1,5 mm umfasst,
   - ein Organ (30, 30', 30") zum Ausrichten des optischen Sammlers (20) mit dem Opto-Koppler, wobei der Opto-Koppler und das Ausrichtorgan aus einem Stück bestehen oder miteinander direkt oder indirekt befestigt sind,

   wobei der zentrale Abstand $e_F$ auf der Achse Oz zwischen der Sammeloberfläche und der zentralen Ausgangsfläche (12) nicht gleich null und kleiner als 5 mm ist,
   und das optomechanische System eine Anschlagoberfläche (40) der Endoberfläche (21a) umfasst.

2. Optomechanisches System (1000, 2000, 3000, 4000) nach dem vorhergehenden Anspruch, **dadurch gekennzeichnet, dass** der Boden (110) des Hohlraums, die zentrale Ausgangsfläche (12) und die umfängliche Ausgangsfläche (13) derart sind, dass Lichtstrahlen, die von dem Boden des Hohlraums gebrochen werden, die insbesondere von einem Punkt auf der Achse Oz ausgehen, von der umfänglichen Ausgangsfläche gebrochen werden, und dass der Opto-Koppler bevorzugt derart ist, dass die Lichtstrahlen, die insbesondere von einem Punkt auf der Achse Oz ausgehen, die zuerst von der seitlichen Eingangsoberfläche (14), dann auf der umfänglichen reflektierenden Oberfläche (15) gebrochen werden, sich im Bereich der Sammeloberfläche (20a) in einer gemeinsamen Zone mit Lichtstrahlen, die insbesondere von einem Punkt auf der Achse Oz hervorgehen und zuerst von dem Boden des Hohlraums gebrochen werden, befinden.

3. Optomechanisches System (1000, 2000, 3000, 4000) nach einem der vorhergehenden Ansprüche, **dadurch gekennzeichnet, dass** RINT kleiner als 3,0 mm und bevorzugt größer oder gleich 1,5 mm und besser 2,2 mm bis 2,6 mm ist.

4. Optomechanisches System (1000, 2000, 3000, 4000) nach einem der vorhergehenden Ansprüche, **dadurch gekennzeichnet, dass** der Opto-Koppler (1 bis 1") durch die folgenden Maße definiert ist:

   - $1{,}88\ R_{INT} < W < 3{,}1\ R_{INT}$,
   - $0{,}41\ R_{INT} < R_A < 0{,}68 R_{INT}$,

- 0,4 $R_{INT}$ < $R_1$ < 0,66 $R_{INT}$-

5. Optomechanisches System (1000, 2000, 3000, 4000) nach einem der vorhergehenden Ansprüche, **dadurch gekennzeichnet, dass** der Opto-Koppler (1 bis 1") durch die folgenden Maße definiert ist:

- W kleiner als 10 mm, bevorzugt kleiner als 7 mm,
- H kleiner als W, insbesondere H größer als 3,6 mm und kleiner als 4 mm,
- RA größer als 1,2 mm und kleiner als 1,6 mm,
- R1 größer als 1,2 mm und kleiner als 1,6 mm,
- hE', maximale Tiefe des Bodens (110, 11a) größer als 1,4 mm und kleiner als 1,8 mm.

6. Optomechanisches System (1000, 2000, 3000, 4000) nach einem der vorhergehenden Ansprüche, **dadurch gekennzeichnet, dass** die Endoberfläche (21a) von der Anschlagoberfläche (40) mit internem Rand B vorragt, und die Endoberfläche (21a) gegenüber der umfänglichen Ausgangsfläche (13, 13a) liegt und bevorzugt 0,30 $R_{INT}$ < $R_I$ < 0,60 $R_{INT}$ mit $R_I$, dem radialen Abstand zwischen A und I, wobei I die Projektion gemäß Oz auf der umfänglichen Ausgangsfläche (13) des internen Rands F des Mantels (21) ist, und wobei A das seitliche Ende der zentralen Ausgangsfläche (12) ist.

7. Optomechanisches System (2000) nach einem der vorhergehenden Ansprüche, **dadurch gekennzeichnet, dass** die Anschlagoberfläche (40) kegelstumpfförmig ist, und die Endoberfläche (21a) komplementäre Form zu der Anschlagoberfläche hat.

8. Optomechanisches System (1000, 2000, 3000, 4000) nach einem der vorhergehenden Ansprüche, **dadurch gekennzeichnet, dass** sich die umfängliche reflektierende Oberfläche (15) von der seitlichen Eingangsoberfläche (14) und der Eingangsfläche (11) in Richtung des Ausgangs des Kopplers erstreckt und bevorzugt:

- mit maximalem Maß zD gemäß Oz größer als H/2 und bevorzugt kleiner als das Mindestmaß zA der zentralen Ausgangsfläche (12) und/oder als das Maß in z der umfänglichen Ausgangsfläche (13, 13a),
- und/oder
- mit dem Mindestabstand hm, Stoffeingang genannt, zwischen der umfänglichen reflektierenden Oberfläche (15) und der umfänglichen Ausgangsfläche (13, 13a), die größer ist als 0,8 mm.

9. Optomechanisches System (1000, 2000, 3000, 4000) nach einem der vorhergehenden Ansprüche, **dadurch gekennzeichnet, dass** auf mindestens einem Abschnitt der Oberfläche (14a), der dem Boden (110) des Hohlraums am nächsten liegt, die seitliche Eingangsfläche (14) kegelstumpfförmig und in Richtung des Eingangs des Kopplers aufgeweitet ist.

10. Optomechanisches System (1000, 2000, 3000, 4000) nach einem der vorhergehenden Ansprüche, **dadurch gekennzeichnet, dass** das Ausrichtorgan (30), das bevorzugt rotationssymmetrisch ist und eine Achse hat, die mit der Achse Oz übereinstimmt, den optischen Sammler (20) aufnimmt, und dass der Ausrichtkörper und/oder das Ausrichtorgan die Anschlagoberfläche (40) integriert, und der Körper (1) bevorzugt das Ausrichtorgan (30) integriert.

11. Optomechanisches System (1000, 2000, 3000, 4000) nach einem der vorhergehenden Ansprüche, **dadurch gekennzeichnet, dass** es eine Lichtquelle (51) umfasst, die auf der Achse Oz und in einem Abstand $e_i$ auf der Achse Oz, der kleiner ist als 0,5 mm, zentriert ist, auf einem Träger, Quellenträger genannt (6), über einen eventuellen Sockel (53), und dass der Opto-Koppler (1, 1a, 1') bevorzugt das Ausrichtorgan (30) integriert, auf dem Quellenträger (60) über eine oder mehr Auflageoberflächen (34, 17') des Kopplers ruht, insbesondere in Bezug auf den Hohlraum (10a) vorragend, wobei die Auflageoberfläche(n) bevorzugt von der umfänglichen reflektierenden Oberfläche (15) beabstandet ist/sind, oder dass der Opto-Koppler (1") in dem Ausrichtorgan (30") zusammengefügt ist, das auf dem Quellenträger (6) über eine oder mehr Auflageflächen (34') ruht, insbesondere in Bezug auf den Hohlraum (10a) vorragend, wobei die Auflagefläche(n) bevorzugt von der umfänglichen reflektierenden Oberfläche (15) beabstandet ist/sind.

12. Optomechanisches System (1000, 2000, 3000, 4000) nach einem der vorhergehenden Ansprüche, **dadurch gekennzeichnet, dass** der Opto-Koppler (1, 1a, 1'), der bevorzugt das Ausrichtorgan (30) integriert, fest mit dem Quellenträger (6) verbunden ist, wobei der Quellenträger (6) und eine der seitlichen Zonen des Opto-Kopplers (34) komplementäre Zusammenfügemittel (35, 61) und eventuell zusätzliche Verriegelungsmittel (33, 36) umfassen, oder dass der Optokoppler (1") in dem Ausrichtorgan zusammengefügt ist, insbesondere von dem Quellenträger beabstandet, wobei das Ausrichtorgan (30") auf dem Quellenträger (6) ruht und fest mit dem Quellenträger (6) verbunden ist, und bevorzugt eine oder mehr seitliche Flächen und der Quellenträger ergänzende Zusammenfügemittel (35', 61) und eventuell zusätzliche Verriegelungsmittel umfasst.

**13.** Optomechanisches System (1000, 2000, 3000, 4000) nach einem der vorhergehenden Ansprüche, **dadurch gekennzeichnet, dass** sich die Lichtleitfasern am Ausgang des Mantels (21) in mindestens einer dünnen Injektionslage organisieren, insbesondere mit einer Stärke kleiner als 2 mm, die auf ein dünnes Lichtextraktionselement, insbesondere mit einer Stärke kleiner als 5 mm, mündet.

**14.** Baugruppe, die den Opto-Koppler und das Ausrichtorgan des optomechanischen Systems nach einem der Ansprüche 1 bis 13 umfasst, die fest miteinander verbunden sind, eventuell aus einem Stück, wobei der Körper oder das Ausrichtorgan die Anschlagoberfläche integriert, die geeignet ist, um den optischen Sammler zur Auflage zu führen.

**15.** Opto-Koppler (1 bis 1") des optomechanischen Systems nach einem der Ansprüche 1 bis 13 und der bevorzugt die Anschlagoberfläche integriert, die geeignet ist, um den optischen Sammler zur Auflage zu führen.

**16.** Beleuchtungsvorrichtung, die insbesondere dünn ist, die das optomechanische System (1000 bis 4000) nach einem der Ansprüche 1 bis 13 umfasst, **dadurch gekennzeichnet, dass** es das insbesondere dünne Lichtextraktionselement umfasst, das aus mindestens einem der folgenden Elemente ausgewählt ist:

- Lichtleitfasern mindestens einer Injektionslage aus Lichtleitfasern, die bevorzugt aus dem Sammler stammen, auf der Oberfläche abgeschliffenen Lichtleitfasern für die Verteilung von Licht, wobei die Fasern eventuell mindestens teilweise in oder auf einem durchsichtigen oder halbdurchsichtigen Material, insbesondere Glas oder Kunststoff liegen,
- einem Leuchtgewebe, das ein gewebtes Textil umfasst, das Lichtleitfasern umfasst, die in ein Textil gewebt sind, Lichtleitfasern mindestens einer Injektionslage aus Lichtleitfasern, die bevorzugt aus dem Sammler stammen, auf der Oberfläche abgeschliffenen Lichtleitfasern für die Verteilung des Lichts,
- einer faserigen Struktur, die bevorzugt aus mindestens einem der folgenden Elemente ausgewählt ist: einem Faserflor, einem gewebten, ungewebten, gestrickten Textil, einer faserigen Struktur, die insbesondere auf einer Hauptfläche einer Glas- oder Kunststoffscheibe aufgebracht ist,
- mindestens einem durchsichtigen oder halb durchsichtigen Blatt oder einer durchsichtigen oder halb durchsichtigen Folie, insbesondere Glas und/oder Kunststoff, gekoppelt mit einer Injektionsschicht aus Lichtleitfasern, die bevorzugt aus dem Sammler hervorgehen, wobei die Folie Mittel zum Verteilen des Lichts umfasst.

**17.** Beleuchtungsvorrichtung nach dem vorhergehenden Anspruch, **dadurch gekennzeichnet, dass** sie einen Träger umfasst, der bevorzugt ausgewählt ist aus:

- einem Aufhängungssystem, insbesondere einer Leiste,
- einem Chassis,
- einer Platte, auf der das Lichtextraktionselement angebaut beziehungsweise befestigt ist, insbesondere einer Gipsplatte oder einer durchsichtigen Platte, einer durchscheinenden Platte.

## Claims

**1.** An optomechanical system (1000, 2000, 3000, 4000) for injecting light, especially into a thin optical medium, the system comprising:

- an optical coupler (1, 1a, 1") that comprises a body of axis Oz, O being the center of the entrance of the optical coupler, including integrally formed:

- a lens (10) of axis coincident with the axis Oz, of preferably subcentimeter-size maximum width W, comprising:

- a convex entrance face (11) of radial extent $R_1$;
- a convex central exit face (12), defined by a central extent, on the axis Oz, called H and preferably smaller than W, and of radial extent RA; and
- a peripheral exit face (13, 13a) that comprises a part joined to the central exit face, said part being flat, especially annular, or concave or frustroconical and flared in the direction of the exit of the system;

- a cavity (10a), of axis coincident with the axis Oz, comprising a bottom (110) containing the entrance face (11), and comprising a lateral surface (14, 14a to 14c), called the entrance lateral surface;
- a peripheral reflective surface (15), encircling the lens and the cavity, of axis coincident with the axis Oz, able to totally internally reflect light rays refracted by the entrance lateral surface, said peripheral reflective surface extending beyond the entrance face (11) in the direction of the exit of the optical coupler;

- an optical collector (20) of axis coincident with the axis Oz, with as entrance, a surface (20a), called the collecting surface, facing the central exit face (12), of millimeter-size radial extent RINT, and a numerical aperture NA smaller than 1, the collector (20) comprising a jacket (21) having a given end surface (21a), the central exit face (12) and the peripheral exit face (13, 13a) being spaced apart from the collecting surface (20a), the optical collector comprising a bundle of optical fibers, said optical fibers having a diameter smaller than 1.5 mm; and
- a member (30, 30', 30") for aligning the optical collector (20) with the optical coupler, the optical coupler and the aligning member being integrally formed or being indirectly or directly fastened together,

the central distance $e_F$ on the axis Oz between the collecting surface and the central exit face (12) being nonzero and smaller than 5 mm,
and the optomechanical system comprising a stop surface (40) against which the end surface (21a) abuts.

2. The optomechanical system (1000, 2000, 3000, 4000) as claimed in the preceding claim, **characterized in that** the bottom (110) of the cavity, the central exit face (12) and the peripheral exit face (13) are such that light rays refracted by the bottom of the cavity and especially originating from a point on the axis Oz are refracted by the peripheral exit face, and **in that** the optical coupler is preferably such that light rays, especially originating from a point on the axis Oz, first refracted by the entrance lateral surface (14) then on the peripheral reflective surface (15) meet at the collecting surface (20a) in a zone common to light rays especially originating from a point on the axis Oz and first refracted by the bottom of the cavity.

3. The optomechanical system (1000, 2000, 3000, 4000) as claimed in one of the preceding claims, **characterized in that** $R_{INT}$ is smaller than 3.0 mm and preferably larger than or equal to 1.5 mm and preferably from 2.2 mm to 2.6 mm.

4. The optomechanical system (1000, 2000, 3000, 4000) as claimed in one of the preceding claims, **characterized in that** the optical coupler (1 to 1") is defined by the following dimensions:

- $1.88 R_{INT} < W < 3.1 R_{INT}$;
- $0.41 R_{INT} < R_A < 0.68 R_{INT}$; and
- $0.4 R_{INT} < R_1 < 0.66 R_{INT}$.

5. The optomechanical system (1000, 2000, 3000, 4000) as claimed in one of the preceding claims, **characterized in that** the optical coupler (1 to 1") is defined by the following dimensions:

- W smaller than 10 mm, preferably smaller than 7 mm;
- H smaller than W, especially H larger than 3.6 mm and smaller than 4 mm;
- RA larger than 1.2 mm and smaller than 1.6 mm;
- R1 larger than 1.2 mm and smaller than 1.6 mm; and
- hE', maximum depth of the bottom (110, 11a) larger than 1.4 mm and smaller than 1.8 mm.

6. The optomechanical system (1000, 2000, 3000, 4000) as claimed in one of the preceding claims, **characterized in that** the end surface (21a) extends beyond the stop surface (40) of internal edge B, and the end surface (21a) is facing the peripheral exit face (13, 13a) and preferably $0.30 R_{INT} < R_I < 0.60 R_{INT}$, $R_I$ being the radial distance between A and I, where I is the projection along Oz onto the peripheral exit face (13) of the internal edge F of the jacket (21) and where A is the lateral end of the exit central face (12).

7. The optomechanical system (2000) as claimed in one of the preceding claims, **characterized in that** the stop surface (40) is frustroconical and the end surface (21a) has a complementary shape to the stop surface.

8. The optomechanical system (1000, 2000, 3000, 4000) as claimed in one of the preceding claims, **characterized**

**in that** the peripheral reflective surface (15) gets further away from the entrance lateral surface (14) and from the entrance face (11) in the direction of the exit of the coupler and preferably:

- of maximum extent zD along Oz larger than H/2 and preferably smaller than the minimum extent zA of the central exit face (12) and/or that the extent in z of the peripheral exit face (13, 13a);
- and/or
- the minimum distance hm, called the minimum material entrance distance, between said peripheral reflective surface (15) and the peripheral exit face (13, 13a) is larger than 0.8 mm.

9. The optomechanical system (1000, 2000, 3000, 4000) as claimed in one of the preceding claims, **characterized in that** on at least one surface portion (14a) closest to the bottom (110) of the cavity, the entrance lateral surface (14) is frustroconical and flared in the direction of the entrance of the coupler.

10. The optomechanical system (1000, 2000, 3000, 4000) as claimed in one of the preceding claims, **characterized in that** the aligning member (30), which is preferably axisymmetric and of axis coincident with the axis Oz, houses the optical collector (20), and **in that** the body and/or the aligning member incorporates the stop surface (40) and preferably the body (1) incorporates the aligning member (30).

11. The optomechanical system (1000, 2000, 3000, 4000) as claimed in one of the preceding claims, **characterized in that** it comprises a light source (51), centered on the axis Oz and at a distance $e_i$ away from the axis Oz smaller than 0.5 mm, said source being placed on a carrier (6), called the source carrier, via an optional base (53), and **in that** the optical coupler (1, 1a, 1') preferably incorporating the aligning member (30), rests on the source carrier (60), via one or more bearing surfaces (34, 17') of the coupler, especially protruding relative to the cavity (10a), said bearing surface(s) preferably being spaced apart from the peripheral reflective surface (15) or **in that** the optical coupler (1") is assembled in the aligning member (30"), which rests on the source carrier (6) via one or more bearing areas (34') especially protruding relative to the cavity (10a), said bearing area(s) preferably being spaced apart from the peripheral reflective surface (15).

12. The optomechanical system (1000, 2000, 3000, 4000) as claimed in one of the preceding claims, **characterized in that** the optical coupler (1, 1a, 1'), preferably incorporating the aligning member (30) is securely fastened to the source carrier (6), preferably the source carrier (6) and one or more lateral zones of the optical coupler (34) comprise complementary assembly means (35, 61) and optionally additional locking means (33, 36) or **in that** the optical coupler (1") is assembled in the aligning member and especially spaced apart from the source carrier, the aligning member (30") resting on the source carrier (6) and being securely fastened to the source carrier (6) and preferably one or more lateral areas and the source carrier comprising complementary assembly means (35', 61) and optionally additional locking means.

13. The optomechanical system (1000, 2000, 3000, 4000) as claimed in one of the preceding claims, **characterized in that** the optical fibers organize on exiting the jacket (21) into at least one thin injection ribbon, especially of thickness smaller than 2 mm, opening onto a thin light-extracting medium, especially of thickness smaller than 5 mm.

14. An assembly comprising the optical coupler and the aligning member of the optomechanical system as claimed in one of claims 1 to 13, which are securely fastened, optionally integrally formed, the body or the aligning member incorporating the stop surface against which the optical collector is able to bear.

15. An optical coupler (1 to 1") of the opto mechanical system as claimed in one of claims 1 to 13, and preferably incorporating the stop surface against which the optical collector is able to bear.

16. An illuminating device, especially a thin illuminating device, comprising the optomechanical system (1000 to 4000) as claimed in one of claims 1 to 13, **characterized in that** it comprises the, especially thin, light-extracting medium, which is chosen from at least one of the following elements:

- optical fibers of at least one injection ribbon made of optical fibers preferably originating from the collector, the surface of said optical fibers being abraded in order to scatter light, said fibers optionally being at least partially in or on a semitransparent or transparent material, especially glass or plastic;
- a light-emitting fabric comprising a woven textile including optical fibers woven into a textile, said optical fibers forming at least one injection ribbon made of optical fibers preferably originating from the collector, the surface of said optical fibers being abraded in order to scatter light;

- a fibrous structure, preferably chosen from at least one of the following elements: a mat of fibers, a knitted, nonwoven or woven textile, said fibrous structure especially being applied to a main face of a glass or plastic sheet;
- at least one semitransparent or transparent, especially glass and/or plastic sheet or film, coupled to an injection ribbon made of optical fibers, preferably originating from the collector, said film comprising means for scattering light.

17. The illuminating device as claimed in the preceding claim, **characterized in that** it comprises a carrier, preferably chosen from:

- a suspending system, especially a hanger;
- a scaffold; and
- a board to which the light-extracting medium is added, even fastened, especially a plasterboard, a transparent board or a translucent board.

# Fig.1
ART ANTERIEUR

# Fig.2

Fig.3

Fig.4

Fig.5

EP 3 027 962 B1

## Fig.6

## Fig.7

33

Fig.1'

Fig.8

EP 3 027 962 B1

Fig.9

3000

1'

17'

Fig.10

Z

21

20

20a

F B

G

30'

30'a

S

J

A A1

40'

40

36

1'

E'

D

H

33'

E

34'

C1

O

C

51

53

17'

61

6

33

35

Fig.11

## RÉFÉRENCES CITÉES DANS LA DESCRIPTION

**Documents brevets cités dans la description**

- FR 2859737
- FR 2936592
- WO 2007003857 A
- WO 2009064275 A
- WO 2005026423 A
- FR 2907194
- FR 2938628
- WO 2008062141 A
- WO 2012098330 A